# EUROPÄISCHE PATENTSCHRIFT

(11) **EP 3 814 252 B1**
(45) Veröffentlichungstag und Bekanntmachung des Hinweises auf die Patenterteilung: **25.12.2024**
(21) Anmeldenummer: 19746173.4
(22) Anmeldetag: 27.06.2019
(51) Int. Cl.: B65G 43/00, B65G 47/38, B65G 47/61

(54) **VORRICHTUNG UND VERFAHREN ZUR INSPEKTION VON HÄNGEND FÖRDERBAREN TRANSPORTTASCHEN**
APPARATUS AND METHOD FOR INSPECTING SUSPENDEDLY CONVEYABLE TRANSPORT BAGS
DISPOSITIF ET PROCÉDÉ D'INSPECTION DE SACS DE TRANSPORT POUVANT ÊTRE CONVOYÉS DE MANIÈRE SUSPENDUE

(30) Priorität: 28.06.2018 CH 8192018
(43) Veröffentlichungstag der Anmeldung: 05.05.2021
(73) Patentinhaber: FERAG AG, 8340 Hinwil (CH)
(72) Erfinder: DURTSCHI, Andreas, 8820 Wädenswil (CH)
(74) Vertreter: IPrime Rentsch Kaelin AG
(86) Internationale Anmeldenummer: PCT/IB2019/055424
(87) Internationale Veröffentlichungsnummer: WO 2020/003180

(56) Entgegenhaltungen:
- EP-A1- 0 861 129
- EP-A1- 3 293 130
- WO-A1-2017/109657
- WO-A1-2018/078098
- JP-A- 2014 076 878
- JP-A- H0 656 248
- US-A- 3 807 314
- US-A1- 2014 193 100

## Beschreibung

### Technisches Gebiet

Die vorliegende Erfindung bezieht sich auf das Gebiet der Transport- und Fördertechnik. Sie betrifft eine Vorrichtung und ein Verfahren zur Inspektion von hängend förderbaren Transporttaschen.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen Glieder einer Kette bilden. die entlang eines Förderweg bewegt wird.

Ebenfalls bekannt sind schwerkraftgeförderte Fördersysteme, bei welchen sich einzelne mit Rädern ausgestattete Förderelemente auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc. So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und das einfache, reibungslose und effiziente Entnehmen der Waren aus dem Transportelementen. Ein manuelles Entnehmen der Waren aus den Transporttaschen erlaubt dabei eine flexible Handhabung verschiedener Waren, ist jedoch langsam und kostenintensiv.

WO 2017/088076 A1 der Anmelderin zeigt eine Transporteinheit mit einem Laufwagen zum Einsatz in einem Hängefördersystem und mit einer Transporttasche zur Aufnahme des Transportgutes. Die Transporttasche weist in Transportrichtung gesehen eine Rückwand und einer zu dieser parallelen Vorderwand auf, die über einen Boden und ein bügelartiges Distanzhalterelement schwenkbar verbunden sind. Zusammen mit zwei Seitenwänden bilden diese einen Aufnahmeraum in Form eines Parallelepipeds mit einer Öffnung. Die Rückwand der Transporttasche ist schwenkbar mit dem Laufwagen verbunden. An einem unteren, vom Laufwagen abgewandtem Ende der Rückwand und an einem oberen Ende der Vorderwand sind Führungsrollen angebracht, um die räumlich Lage der Transporttasche bei der Förderung im Transportsystems mittels Kulissenführungen oder anderen geeigneten Mitteln zu steuern. Zur automatischen Entleerung der Transporttasche wird die während dem Transport senkrecht am Laufwagen hängende Transporttasche über eine geeignete Kulissenführung der Führungsräder an der Rückwand in eine horizontale Lage gebracht und die Förderung der Tasche unterbrochen. Anschliessend wird durch ein Absenken des Laufwagens die Tasche in eine schräge Kopfüber-Position gebracht, in welcher Rollen einer schrägen Rollenbahn in entsprechende Ausnehmungen der Vorderhand der Transporttasche eingreifen. Das Transportgut rollt auf der Rollenbahn schwerkraftgetrieben aus der Transporttasche und wird wegbefördert. Der Laufwagen wird wieder angehoben, und die nun leere Transporteinheit wird zur erneuten Verwendung weiterbefördert.

In der internationalen Anmeldung PCT/IB2018/050446 der Anmelderin vom 25. Januar 2018 mit dem Titel «Vorrichtung zum Entleeren hängend geförderter Transporttaschen», veröffentlicht als WO 2018/142243 A1, wird eine andere Vorrichtung zum automatischen Entleeren von hängend geförderten Transporttaschen offenbart. Die Transporttaschen weisen eine im befüllten Zustand nach oben offene Tasche mit einer Vorderseite auf. Die Transporttasche werden hängend in einem schienengeführten Fördersystem oder einem Förderkettensystem entlang einem Förderweg gefördert und der Vorrichtung zugeführt. Ein umlaufendes Förderband dient zur Übernahme von in den Transporttaschen transportierten Stückguteinheiten. In einem Kontaktabschnitt sind der Förderweg des Fördersystems und der Förderweg des Förderbands derart zueinander angeordnet, dass der Abstand des Förderwegs des Fördersystems und des Förderwegs des Förderbands kontinuierlich kleiner wird, so dass bei der Förderung einer Transporttasche entlang des Kontaktabschnitts die Vorderseite der Tasche der Transporttasche das Förderband kontaktiert und auf diesem zu liegen kommt und dabei die Transporttasche nach hinten geschwenkt wird. In einem Übergabeabschnitt verlaufen der Förderweg des Fördersystems und der Förderweg des Förderbands im Wesentlichen parallel zueinander mit einem gewissen Gefälle nach unten, wobei die Vorderseite der Tasche einer Transporttasche bei der Förderung entlang des Übergabeanschnitts weiterhin auf dem Förderband liegt, so dass die Öffnung der Tasche der Transporttasche schräg nach unten orientiert ist, und in der Tasche der Transporttasche vorhandene Stückguteinheiten schwerkraftgetrieben aus der Tasche auf das Förderband gleiten. In einem Trennabschnitt wird der Abstand des Förderwegs des Fördersystems und des Förderwegs des Förderbands kontinuierlich grösser, so dass bei der Förderung einer Transporttasche entlang des Trennabschnitts die entleerte Transporttasche vom Förderband abgehoben wird und in die frei hängende Lage zurück schwenkt.

Die vorgenannten Systeme sind so ausgestaltet, dass die Entleerung der Transporttaschen schwerkraftgetrieben automatisch erfolgt. Die entleerten Transporttaschen werden anschliessend im Transportsystem einer weiteren Verwendung zugeführt, beispielsweise einer erneuten Befüllung. Würde eine Transporttasche beim Entleerungsvorgang nicht wie vorgesehen entleert, so würde die Transporttasche im weiterhin befüllten Zustand zurück ins Transportsystem geführt. Das Transportgut stünde nicht wie vorgesehen für die weitere Bearbeitung zur Verfügung. Im Transportsystem wäre zudem eine Transporttasche im Umlauf, die eigentlich leer sein sollte. Solche undefinierten Zustände sind aus verschiedenen Gründen zu vermeiden.

In der internationalen Anmeldung PCT/IB2018/050445 der Anmelderin vom 25. Januar 2018 mit dem Titel «Vorrichtung und Verfahren zum Drehen, Öffnen und Befüllen hängend geförderter Transporttaschen», veröffentlicht als WO 2018/142242 A1, wird eine Vorrichtung zum automatischen Öffnen von in einem im Transportsystem hängend geförderten leeren Transporttaschen offenbart, so dass diese effizient befüllt werden können, durch manuelles oder automatisches Einbringen von Stückguteinheiten in die geöffnete Transporttasche. Die befüllten Transporttaschen werden anschliessend in Transportsystem einer weiteren Verwendung zugeführt, insbesondere einer Zwischenlagerung oder einer Bearbeitung eines Kommissionierungsauftrags. Würde eine Transporttasche beim Befüllungsvorgang nicht wie vorgesehen befüllt, beispielsweise weil ein Problem bei der Zuführung oder beim Befüllungsvorgang auftritt, kann dies zu undefinierten Zuständen und Problemen bei späteren Bearbeitungsschritten führen.

Es besteht allgemein das Bedürfnis nach Fortschritten in diesem Gebiet der Technik.

JP H06/56248 A offenbart eine Vorrichtung, mit welcher Gegenstände an sich kontinuierlich weiterbewegende Transporthaken einer Hängefördereinrichtung gehängt oder von diesen abgenommen werden können. Die Haken werden mit Führungsmitteln ausgerichtet. Eine Detektionsvorrichtung in Form einer Lichtschranke detektiert das Passieren eines Transporthakens. Ein Roboterarm bewegt sich synchron zu den Transporthaken und hängt den Gegenstand das die Transporthaken.

JP 2014/76878 A offenbart eine Vorrichtung, mit welcher die Anwesenheit eines Gegenstands auf einer Schale eines umlaufenden Schalenförderers festgestellt werden kann. Ein zweidimensionales Laserdistanzmessgerät erfasst die Position eines Gegenstands und die Position der Hände eines Bedienperson. Aus diesen Daten und der Bewegungsgeschwindigkeit des Schalenförderers wird bestimmt, ob ein Gegenstand auf einer Schale liegt.

WO 2018/078098 A1 offenbart eine Vorrichtung zum Befüllen einer Transporttasche eines Hängefördersystems, bei welchem die Transporttasche geöffnet wird und ein Gegenstand schwerkraftgetrieben über eine Rollenrampe in die geöffnete Transporttasche gleitet. Ebenso offenbart wird eine Vorrichtung zur automatischen Entleerung von Hängefördertaschen, wie sie auch in der obenstehend diskutierten WO 2018/142243 A1 gezeigt ist.

### Darstellung der Erfindung

Die Begriffe Fördereinheit und Transporteinheit und die Begriffe Fördersystem und Transportsystem werden im Rahmen dieser Beschreibung synonym verwendet. Die Begriffe Förderwagen und Laufwagen werden im Rahmen dieser Beschreibung synonym verwendet, und bezeichnen denjenigen Teil einer Fördereinheit, welcher auf einer Laufschiene eines Fördersystems anordenbar und auf der genannten Laufschiene rollend und/oder gleitend und/oder berührungsfrei schwebend bewegbar ist.

Es ist eine Aufgabe der Erfindung, eine Vorrichtung zur Inspektion von hängend förderbaren Transporttaschen bereit zu stellen, welche eine einfache und effiziente Überprüfung beziehungsweise Feststellung des Befüllungsstatus beziehungsweise des Entleerungsstatus einer Transporttasche erlaubt.

Es ist eine andere Aufgabe der Erfindung, ein Verfahren zur Inspektion von hängend förderbaren Transporttaschen bereit zu stellen, welches eine einfache und effiziente Überprüfung beziehungsweise Feststellung des Befüllungsstatus beziehungsweise des Entleerungsstatus einer Transporttasche erlaubt.

Diese und andere Aufgaben werden gelöst durch eine erfindungsgemässe Vorrichtung und ein erfindungsgemässes Verfahren gemäss dem unabhängigen Anspruch. Weitere bevorzugte Ausführungsformen sind in den abhängigen Ansprüchen gegeben.

Unter dem Begriff «dreidimensionales Bild» wird im Zusammenhang der vorliegenden Offenbarung ein Datensatz verstanden, welcher die dreidimensionale Position und gegebenenfalls optische Informationen (Helligkeit, Farbe) einer Mehrzahl von Punkten auf einer Oberfläche eines abgebildeten Objekts umfasst.

Ein erster Aspekt der Erfindung betrifft eine vorteilhafte Vorrichtung zur Inspektion von hängend förderbaren Transporttaschen.

Eine solche Vorrichtung zur Inspektion von hängend förderbaren Transporttaschen mit einem Tascheninnenraum zur Aufnahme von Stückguteinheiten, wobei die Transporttasche eine Taschenöffnung des Tascheninnenraums aufweist, und eine Detektionsvorrichtung, welche eingerichtet ist, mindestens ein zweidimensionales und/oder dreidimensionales Bild von mindestens einem Teil des Tascheninnenraums der zu inspizierenden Transporttasche aufzunehmen.

In einer vorteilhaften Ausführungsform einer solchen Inspektionsvorrichtung umfasst diese eine Vorrichtung zum Öffnen und/oder Offenhalten der Taschenöffnung einer zu inspizierenden Transporttasche.

Alternativ oder zusätzlich weist die Transporttasche mindestens eine Taschenöffnung des Tascheninnenraums auf, welche in hängender Position der Transporttasche in einem oberen Bereich des Tascheninnenraums und/oder in einem seitlichen Bereich des Tascheninnenraums liegt.

Die Taschenöffnung der Transporttasche kann als transparenter Bereich in einer Wand der Transporttasche, insbesondere als Fenster oder Fensterabschnitt in einer Wand der Transporttasche, realisiert sein.

Aufgrund der Daten der Detektionsvorrichtung der Inspektionsvorrichtung kann dann beispielsweise ein Entleerungsstatus bzw. Befüllungsstatus der inspizierten Transporttasche bestimmt werden.

Entspricht der Status einer inspizierten Transporttasche nicht dem vorgesehenen Wert, ist zum Beispiel die Transporttasche nach einem Entleerungsvorgang nicht leer, weil ein Objekt unvorhergesehen in der Tasche verbliebenen ist, oder ist die Transporttasche nach einem Befüllungsvorgang leer, so kann beispielsweise die betroffene Transporttasche in einer Datenbank des Transportsystems mit einer entsprechenden virtuellen Markierung versehen werden. Die Transporttasche kann dann flussabwärts im Transportsystem zur genaueren Untersuchung separiert oder ausgeschleust werden, ohne dass ein kontinuierlicher Betrieb des Systems unterbrochen werden muss.

Für ein Kommissionierungssystem ist es hingegen vorteilhaft, dass eine nicht vollständige Entleerung einer Transporttasche nicht nur zuverlässig erkannt wird, sondern dass das Problem auch umgehend behandelt wird, da ansonsten gegebenenfalls ein Kommissionierungsauftrag nicht korrekt abgeschlossen werden kann. In einem solchen Fall kann beispielsweise eine inspizierte Transporttasche in eine Position gefahren werden, in der sie sicher und effizient von einer Bedienperson untersucht und gegebenenfalls händisch entleert werden kann.

Vorteilhaft umfasst die Detektionsvorrichtung einer solchen Inspektionsvorrichtung mindestens ein Kameramodul, welches eingerichtet ist, mindestens ein Bild von mindestens einem Teil des Tascheninnenraums der zu inspizierenden Transporttasche aufzunehmen.

Ein solches Kameramodul kann eine herkömmliche Digitalkamera sein, insbesondere ein für den Industrieeinsatz geeignetes schnelles CCD-Kameramodul.

Alternativ oder zusätzlich kann die Detektionsvorrichtung mindestens ein Laserscannermodul umfassen, welches eingerichtet ist, einen oder mehrere Laserstrahlen über mindestens einen Teil der Oberfläche des Tascheninnenraums der zu inspizierenden Transporttasche zu führen.

Das Laserscanmodul überstreicht zeilenartig oder rasterartig die abzubildende Oberfläche mit einem Laserstrahl. Sensoren erfassen die Signalintensität des von der Oberfläche reflektierten Laserlichts, und die gemessenen Daten können zu einem Schwarzweiss-Bild oder Graustufen-Bild zusammengeführt werden. Die erhaltenen Bilddaten sind frei von Verzerrungen aufgrund von optischen Effekten. Aus der Achse des Laserstrahls ergeben sich die Polarkoordinaten eines Bildpunktes. Die Distanz als dritte Dimension wird je nach eingesetzter Technologie beispielsweise durch Pulslaufzeit oder Phasenverschiebung ermittelt.

Durch Verwendung von einem oder mehr Kameramodulen, die zur Laserscanachse seitlich versetzt sind, kann alternativ ebenfalls die dritte Dimension eines Bildpunkts berechnet werden, wobei Kamerasysteme mit verschiedenen Ansätzen erhältlich sind, beispielsweise 3D-Triangulation, Streifenlichtprojektion, Höhenprofil. Es resultiert ein dreidimensionales Bild.

Vorteilhaft umfasst die Detektionsvorrichtung ein Beleuchtungsmodul, welches eingerichtet ist mit einem oder mehreren Beleuchtungsmitteln mindestens einen Teil des Tascheninnenraums der zu inspizierenden Transporttasche zu beleuchten.

Die Beleuchtungsmittel, beispielsweise fokussierbare Scheinwerfer, ungerichtete Leuchten, LEDs, Blitzlichter, Ultraviolett- oder Infrarot-Leuchtmittel, etc., sind vorzugsweise so gestaltet und eingerichtet, dass das zu inspizierende Gebiet ideal ausgeleuchtet ist, und gegebenenfalls wechselnde Intensitäten des Umgebungslichts keine Rolle spielen.

Mit zwei oder mehr zu einer Objektivachse eines Kameramoduls versetzten Beleuchtungsmitteln, können mehrere Bilder aufgenommen werden, wobei jeweils nur Teil der Beleuchtungsmittel aktiv ist, beispielsweise nur ein Beleuchtungsmittel. Aufgrund der definierten, räumlich unterschiedlichen Beleuchtungssituation enthalten die Bilddaten auch Informationen zur dritten Dimension. Durch verrechnen von zwei oder mehr solcher Bilddatensätze kann ein dreidimensionales Bild erhalten werden. Entsprechende Algorithmen sind dem Fachmann bekannt.

Der analoge Effekt kann durch unterschiedliche Farbgebung der Beleuchtungsmittel erreicht werden, die beispielsweise komplementär rot und grün leuchten, so dass durch Anwendung entsprechender Farbfilter auf ein Farbbild bzw. die Verwendung der entsprechenden Farbkanäle des Bildsensors bzw. Kameramoduls die Bildinformationen zu den verschiedenen Beleuchtungsmitteln separiert werden können. Entsprechend können alle Beleuchtungsmittel gleichzeitig aktiv sein, und es muss nur ein Bild aufgenommen werden, da die Datensätze durch die Lichtwellenlänge getrennt werden, und nicht durch die Zeitkomponente.

Durch zwei oder mehr Kameramodule mit unterschiedlichen Objektivachsen können gleichzeitig Bilder mit verschiedenen Blickwinkeln aufgenommen werden, aus denen ebenfalls durch geeignete Algorithmen dreidimensionale Bilder errechnet werden können. Entsprechende Kamerasysteme sind bekannt und im Handel erhältlich.

Ebenfalls bekannt sind Kameras mit nur einem Objektiv, bei welchen die Beleuchtung in der Intensität moduliert wird, und aufgrund der Phasenverschiebung der gemessenen Signale eines Bildrasterpunkts die Laufzeit des Lichts, und damit die Distanz bis zum Sensor, bestimmt wird.

Vorteilhaft umfasst die Detektionsvorrichtung weiter ein Bildgebungsmodul, welches eingerichtet ist, aus aufgenommenen Bilddaten der Detektionsvorrichtung ein dreidimensionales Bild von mindestens einem Teil des Tascheninnenraums einer inspizierten Transporttasche zu berechnen.

Ein solches Bildgebungsmodul ist dann vorteilhaft, wenn die eingesetzten Bildgebungsvorrichtungen nicht direkt ein dreidimensionales Bild zur Verfügung stellen. Das Bildgebungsmodul kann als elektronische Vorrichtung ausgestaltet sein, oder als auf einem Mikroprozessor, bspw. einer Digital Signal Processing Einheit oder eines Computers, ausgeführter Algorithmus implementiert sein.

In einer erfindungsgemässen Inspektionsvorrichtung kann die Steuerungs- und Auswertungsvorrichtung der Detektionsvorrichtung die Bilddaten dahingehend auswerten, ob eine Transporttasche leer ist oder nicht. Je nach Position der Inspektionsvorrichtung innerhalb einer Fördersystems können dann entsprechende Massnahmen getroffen werden, insbesondere die Nachkontrolle einer Transporttasche, die nach der Entleerung nicht vollständig leer ist, oder die Nachkontrolle einer Transporttasche, die nach der Befüllung nicht wie vorgesehen befüllt ist. Dies erlaubt allgemein eine verbesserte Qualitätskontrolle, und insbesondere das frühzeitige Erkennen und Beheben von unklaren oder fehlerhaften Zuständen eines Intralogistiksystems. Dies kann aufwendige spätere Problembehebungen vermeiden, beispielsweise Fehllieferungen an Kunden.

Erfindungsgemäß umfasst die Detektionsvorrichtung einer erfindungsgemässen Inspektionsvorrichtung ein Auswertungsmodul, welches eingerichtet ist, die aufgenommenen oder berechneten Bilddaten einer inspizierten Transporttasche zu analysieren und basierend auf dieser Bilddatenanalyse Daten bereitzustellen, welche Informationen dazu enthalten, ob die inspizierte Transporttasche leer ist oder ein Objekt enthält.

Das Auswertungsmodul kann als elektronische Vorrichtung ausgestaltet sein, oder als auf einem Mikroprozessor, bspw. einer Digital Signal Processing Einheit oder eines Computers, ausgeführter Algorithmus implementiert sein.

Die bereitgestellten Daten, welche Informationen dazu enthalten, ob die inspizierte Transporttasche leer ist oder ein Objekt enthält, können im einfachsten Fall ein 1/0-Signal (leer/nicht leer) umfassen. Je nach diesem Wert kann ein Prozess, beispielsweise ein automatischer Befüllungsprozess oder ein automatischer Entleerungsprozess von Transporttaschen, vorübergehend unterbrochen werden, um die Situation zu evaluieren und das gegebenenfalls aufgetretene Problem zu beheben. Die Daten können auch einen Wahrscheinlichkeitswert, beispielsweise als Prozentwert, umfassen. Auf diese Weise können komplexere Steuerungsvorgänge realisiert werden. Die Auswertung der Bilddaten durch eine Inspektionsvorrichtung kann neben der Bestimmung der Anwesenheit eines Objekts in einer Transporttasche auch weitere Aspekte umfassen. Insbesondere ist es möglich, die entsprechenden Objekte zu klassifizieren bzw. zu identifizieren. Beispielsweise können auf einem detektierten Objekt vorhandene optisch lesbare Informationen identifiziert und ausgewertet werden, beispielsweise Barcodes, 2D-Matrix-Codes, Nummern, Text, etc. Diese optisch lesbaren Informationen können zu diesem Zweck auf dem Objekt angebracht worden sein, oder ohnehin schon auf dem Objekt vorhanden sein.

In einer vorteilhaften Ausführungsform eines Detektionsvorrichtung einer erfindungsgemässen Inspektionsvorrichtung umfasst die Detektionsvorrichtung ein Auswertungsmodul, welches eingerichtet ist, die aufgenommenen oder berechneten Bilddaten einer inspizierten Transporttasche zu analysieren und basierend auf dieser Bilddatenanalyse auf einem in der inspizierten Transporttasche angeordneten Objekt vorhandene optisch lesbare Informationen auszulesen.

Die konkrete Lage und Ausrichtung eines Objekts innerhalb der Transporttasche sind in der Regel undefiniert. Vorteilhaft wird in einem ersten Schritt das Objekt im Inspektionsgebiet identifiziert, in einem weiteren Schritt mit geeigneten Bildauswertungsalgorithmen auf einem dem Objekt entsprechenden Bildbereich ein Information enthaltendes Gebiet identifiziert, und schliesslich aus diesem Information enthaltenden Gebiet die Information extrahiert.

Die Extraktion von Informationen aus dem Bilddaten eines Objekts erlaubt die Bestimmung der Identität des Objekts oder der Art des Objekts (beispielsweise der Artikelnummer). Die entsprechenden Informationen können dann mit einem Sollwert des Systems verglichen werden, so dass beispielsweise Transporttaschen, welche mit einem falschen Objekt beladen worden sind, frühzeitig identifiziert und entsprechend behandelt werden können.

Mit entsprechenden Algorithmen kann auch eine allgemeinere Klassifikation bzw. Identifikation von Objekten in den Transporttaschen erfolgen, beziehungsweise eine Identifikation oder Klassifikation ohne die direkte Auswertung optisch lesbarer Daten.

Beispielsweise kann eine Auswertungsvorrichtung dazu eingerichtet sein, in einem Modul auf den Prinzipien der künstlichen Intelligenz (KI) basierende Algorithmen auszuführen, um aufgrund aufgenommener Bilder Objekte zu identifizieren oder zu klassifizieren. Dies hat insbesondere den Vorteil, dass auch Objekte mit wenigen oder keinen direkt auslesbaren optischen Informationen, beispielsweise kleinere Verpackungen mit kleiner Schrittgrösse oder flexible Objekte wie z.B. Kleider oder Güter ohne Verpackung wie beispielsweise Lebensmittel (z.B. Brot, Gemüse, Früchte) identifiziert oder klassifiziert werden können.

In einer vorteilhaften Ausführungsform eines Detektionsvorrichtung einer erfindungsgemässen Inspektionsvorrichtung umfasst die Detektionsvorrichtung ein Auswertungsmodul, welches eingerichtet ist, die aufgenommenen oder berechneten Bilddaten einer inspizierten Transporttasche mit Kl-Algorithmen zu analysieren und basierend auf dieser Bilddatenanalyse ein in der inspizierten Transporttasche angeordnetes Objekt zu identifizieren und/oder zu klassifizieren.

Bei einer weiteren vorteilhaften Ausführungsform einer erfindungsgemässen Inspektionsvorrichtung umfasst die Vorrichtung zum Öffnen und/oder Offenhalten der Taschenöffnung einer zu inspizierenden Transporttasche eine Hebevorrichtung, welche eingerichtet ist, eine zu inspizierende Transporttasche von einer Förderlage, in welcher die Transporttasche senkrecht hängt, in eine Inspektionslage zu bringen, in welcher die Transporttasche auf einer schrägen Ebene derart angeordnet ist, dass eine Vorderwand der Transporttasche oder eine Kante der genannten Vorderwand auf der schrägen Ebene aufliegt, und das der Taschenöffnung der Transporttasche zugewandte Ende der Vorderwand in Schwerkraftrichtung tiefer liegt als das der Taschenöffnung entgegengesetzte Ende der Vorderwand, so dass die innen liegende Oberfläche der Vorderwand eine weitere schräge Ebene bildet. Die Detektionsvorrichtung ist eingerichtet, mindestens ein zweidimensionales und/oder dreidimensionales Bild von mindestens einem Teil des Tascheninnenraums einer in der Inspektionslage angeordneten Transporttasche aufzunehmen, und/oder mindestens ein zweidimensionales und/oder dreidimensionales digitales Bild von einem Bereich der schrägen Ebene unterhalb der Öffnung der Transporttasche aufzunehmen, und/oder mit mindestens einem optischen Sensor, beispielsweise einem Lichtschrankenmodul, das Passieren eines auf der schrägen Ebene gleitenden Objekts zu detektieren.

Wird ein Bild vom Tascheninnenraum aufgenommen, so kann die Transporttasche direkt inspiziertwerden. Es kann also festgestellt werden, ob die Entleerung der Transporttasche vollständig ist oder nicht.

Wird hingegen ein Bild von einem Bereich der schrägen Ebene unterhalb der Öffnung der Transporttasche aufgenommen, und/oder wird mit mindestens einem optischen Sensor, beispielsweise einem Lichtschrankenmodul, das Passieren eines auf der schrägen Ebene gleitenden Objekts detektiert, so kann aufgrund der Anwesenheit oder Abwesenheit eines Objekt auf dem Bild beziehungsweise die Detektion oder Nichtdetektion eines Objektes indirekt auf die erfolgte Entleerung der Transporttasche geschlossen werden.

Eine solche indirekte Inspektion ist für sich allein vor allem dann praktikabel, wenn die Transporttasche nur eine Stückguteinheit enthält. Werden mehrere Stückguteinheiten in einer Transporttasche transportiert, ist eine eindeutige Aussage mit einer solchen indirekten Inspektion der Transporttasche schwieriger zu erreichen.

In Kombination der vorgenannten direkten Inspektion mit einer indirekten Inspektion kann jedoch die Gesamtgenauigkeit der Inspektionsvorrichtung weiter verbessert werden, indem die Anzahl Falschpositiv-Resultate (Transporttasche leer, aber als nicht leer eingestuft) und Falschnegativ-Resultate (Transporttasche nicht leer, aber als leer eingestuft) weiter minimiert wird, so dass die Sensitivität und Spezifität der Inspektionsvorrichtung optimiert wird.

Für die indirekte Inspektion kann analog wie vorhergehend zur direkten Inspektion diskutiert ein Kameramodul und/oder ein Laserscannermodul und/oder ein Beleuchtungsmodul und/oder ein Bildgebungsmodul und/oder ein Auswertungsmodul eingesetzt werden.

Vorteilhaft umfasst bei einer solchen Variante einer erfindungsgemässen Inspektionsvorrichtung die Hebevorrichtung einen Hebetisch, eine Rampe, ein umlaufendes Förderband, eine Rollenanordnung, oder eine Rollenrampe, welche eine schräge Ebene bildet.

Eins solche Hebevorrichtung ist beispielswiese in den Figuren 3, 12 und 13 der internationale Anmeldung PCT/IB2018/050445 (veröffentlicht als WO 2018/142242 A1) der Anmelderin offenbart , wo Hebevorrichtungen im Zusammenhang mit einem automatischen Befüllungsprozess verwendet werden, um Transporttaschen vor der Befüllung zu öffnen.

Bei einer anderen vorteilhaften Ausführungsform einer erfindungsgemässen Inspektionsvorrichtung umfasst die Vorrichtung zum Öffnen und/oder Offenhalten der Taschenöffnung einer zu inspizierenden Transporttasche eine Vorrichtung zum Entleeren von hängend geförderten Transporttaschen. Die Entleerungsvorrichtung umfasst ein Fördersystem, insbesondere ein schienengeführtes Fördersystem oder ein Förderkettensystem, mit welchem Transporttaschen hängend entlang einem Förderweg zugeführt werden können, und ein umlaufendes Förderband zur Übernahme von in den Transporttaschen transportierten Stückguteinheiten. In einem Kontaktabschnitt sind der Förderweg des Fördersystems und der Förderweg des Förderbands derart zueinander angeordnet, dass der Abstand des Förderwegs des Fördersystems und des Förderwegs des Förderbands kontinuierlich kleiner wird, so dass bei der Förderung einer Transporttasche entlang des Kontaktabschnitts eine Vorderwand der Transporttasche das Förderband kontaktiert und auf diesem zu liegen kommt und dabei die Transporttasche nach hinten geschwenkt wird. In einem Übergabeabschnitt verlaufen der Förderweg des Fördersystems und der Förderweg des Förderbands im Wesentlichen parallel zueinander mit einem gewissen Gefälle nach unten, und bei der Förderung der Transporttasche entlang des Übergabeanschnitts liegt die Vorderwand der Transporttasche weiterhin auf dem Förderband, so dass die Taschenöffnung der Transporttasche schräg nach unten orientiert ist, und in dem Tascheninnenraum der Transporttasche vorhandene Stückguteinheiten schwerkraftgetrieben aus dem Tascheninnenraum auf das Förderband gleiten. In einem Trennabschnitt wird der Abstand des Förderwegs des Fördersystems und des Förderwegs des Förderbands kontinuierlich grösser, so dass bei der Förderung der Transporttasche entlang des Trennabschnitts die entleerte Transporttasche vom Förderband abgehoben wird und in die frei hängende Lage zurück schwenkt. Die Detektionsvorrichtung der Inspektionsvorrichtung ist derart eingerichtet, dass sie das mindestens eine zweidimensionale oder dreidimensionale Bild von mindestens einem Teil des Tascheninnenraums der zu inspizierenden Transporttasche aufnehmen kann, wenn sich die zu inspizierende Transporttasche im Übergabeabschnitt oder im Trennabschnitt an einer bestimmten Detektionsposition befindet, an der im funktionsgemässen Betrieb der Vorrichtung zum Entleeren von hängend geförderten Transporttaschen die Entleerung der zu inspizierenden Transporttasche abgeschlossen ist.

Eine Entleerungsvorrichtung, wie sie in dieser Inspektionsvorrichtung verwendet wird, ist beispielswiese in der internationalen Anmeldung PCT/IB2018/050446 (veröffentlich als WO 2018/142243 A1) der Anmelderin offenbart

Vorteilhaft ist bei einer solchen Ausführungsform einer Inspektionsvorrichtung ein Lichtschrankenmodul der Detektionsvorrichtung so positioniert, dass es das Passieren von Objekten an einer bestimmten Position des Förderwegs des Förderbands detektieren kann.

Das Passieren eines Objekts an der Lichtschranke, insbesondere einer aus einer soeben entleerten Transporttasche entnommenen Stückguteinheit, kann verwendet werden, um den Inspektionsvorgang der entleerten Transporttasche auszulösen. Alternativ oder zusätzlich kann die entsprechende Information auch verwendet werden, um die Resultate des Inspektionsvorgangs auszuwerten.

Die Objekte können detektiert werden, wenn sie frei auf dem Förderband nach unten rutschen, und/oder die Objekte können detektiert werden, wenn sie bereits auf einer Rippe oder Querstrebe etc. des Förderbands aufliegen. Im letzteren Fall ist die Geschwindigkeit der Objekte aufgrund der Fördergeschwindigkeit des Förderbands bekannt, so dass zusätzlich auch Informationen beispielsweise zur Grösse des Objekts bestimmt werden können.

Die Detektionsposition einer Transporttasche kann beispielsweise durch einen Positionssensor entlang dem Förderweg des Förderbands oder des Fördersystems bestimmt sein, welcher den Durchgang einer Transporttasche detektiert, und den Inspektionsvorgang auslöst. Beispielsweise kann der Positionssensor, beispielsweise ein einfacher Induktionssensor, den Durchgang eines Laufwagens einer Fördereinheit mit einer Transporttasche feststellen, oder den Durchgang eines Mitnehmers einer Förderkette, welche den Laufwagen entlang des Förderwegs des Fördersystems fördert. Auch die Transporttasche kann direkt detektiert werden.

Eine erfindungsgemässe Inspektionsvorrichtung kann eine in einem Trennabschnitt angeordneten Führungsrampe aufweisen, welche vom Förderband abgehobene Transporttaschen so führt, dass eine Kollision der Transporttaschen mit Teilen der Detektionsvorrichtung, insbesondere einem Kameramodul der Detektionsvorrichtung, nicht möglich ist.

In einer weiteren vorteilhaften Ausführungsvariante einer Inspektionsvorrichtung umfasst die Vorrichtung zum Öffnen und/oder Offenhalten der Taschenöffnung einer zu inspizierenden Transporttasche eine Aktuatorvorrichtung, welche eingerichtet ist, eine mit einer stabilen Rückwand einer zu inspizierenden Transporttasche beweglich verbundene stabile Vorderwand der Transporttasche in Bezug auf die genannte Rückwand in Richtung einer Taschenöffnung der Transporttasche zu bewegen, also gegenüber der genannten Rückwand in Richtung einer Taschenöffnung der Transporttasche zu bewegen.

Vorteilhaft ist bei der vorgenannten Variante einer vorteilhaften Inspektionsvorrichtung die Aktuatorvorrichtung eingerichtet, eine von der Taschenöffnung der Transporttasche abgewandte untere Kante der Vorderwand der Transporttasche in Bezug auf die Rückwand der Transporttasche in Richtung der Taschenöffnung zu bewegen.

Alternativ oder zusätzlich umfasst bei der vorgenannten Variante einer vorteilhaften Inspektionsvorrichtung die Aktuatorvorrichtung einen Hebetisch, eine Rampe, ein umlaufendes Förderband mit Rippen, eine Rollenanordnung oder eine Rollenrampe, welche die Vorderwand der Transporttasche beziehungsweise die untere Kante der Vorderwand in Bezug auf die Rückwand der Transporttasche in Richtung der Taschenöffnung bewegen.

In einer vorteilhaften Variante einer solchen erfindungsgemässen Inspektionsvorrichtung umfasst die Vorrichtung zum Öffnen und/oder Offenhalten der Taschenöffnung einer zu inspizierenden Transporttasche eine Aktuatorvorrichtung, welche eingerichtet ist, eine mit einer Rückwand einer zu inspizierenden Transporttasche beweglich verbundene Vorderwand der Transporttasche in Bezug auf die genannte Rückwand der Transporttasche zu bewegen, oder eine mit einer Vorderwand einer zu inspizierenden Transporttasche beweglich verbundene Rückwand der Transporttasche in Bezug auf die genannte Vorderwand der Transporttasche zu bewegen

Besonders vorteilhaft umfasst die Aktuatorvorrichtung eine Kulissenführung, welche mit einem zwischen Vorderwand und Rückwand angeordneten Bügel einer zu inspizierenden Transporttasche wechselwirkt.

Ein zweiter Aspekt der Erfindung betrifft ein vorteilhaftes Verfahren zur Inspektion von hängend förderbaren Transporttaschen.

Bei einem erfindungsgemässen Verfahren zur Inspektion von hängend förderbaren Transporttaschen
- wird eine zu inspizierende Transporttasche bereitgestellt, wobei die Transporttasche einen Tascheninnenraum zur Aufnahme von Stückguteinheiten und eine Taschenöffnung des Tascheninnenraums aufweist; und
- wird von mindestens einem Teil des Tascheninnenraums mindestens ein zweidimensionales und/oder dreidimensionales Bild aufgenommen.

In einer vorteilhaften Ausführungsvariante eines solchen Inspektionsverfahrens wird die Taschenöffnung der Transporttasche geöffnet oder offengehalten.

Alternativ oder zusätzlich weist vorteilhaft bei einem solchen Verfahren die Transporttasche mindestens eine Taschenöffnung des Tascheninnenraums auf, welche in hängender Position der Transporttasche in einem oberen Bereich des Tascheninnenraums und/oder in einem seitlichen Bereich des Tascheninnenraums liegt.

Bei dem Verfahren kann die Taschenöffnung der Transporttasche als transparenter Bereich in einer Wand der Transporttasche, insbesondere als Fenster oder Fensterabschnitt in einer Wand der Transporttasche, realisiert sein.

Vorteilhaft wird bei einem solchen Verfahren ein oder mehrere Laserstrahlen über mindestens einen Teil der Oberfläche des Tascheninnenraums der zu inspizierenden Transporttasche geführt.

Vorteilhaft wird bei einem solchen Verfahren mindestens ein Teil des Tascheninnenraums der zu inspizierenden Transporttasche mit einem oder mehreren Beleuchtungsmitteln beleuchtet.

Vorteilhaft wird bei einem solchen Verfahren aus aufgenommenen Bilddaten von mindestens einem Teil des Tascheninnenraums einer inspizierten Transporttasche ein dreidimensionales Bild von mindestens einem Teil des Tascheninnenraums berechnet.

Vorteilhaft werden bei einem solchen erfindungsgemässen Verfahren die aufgenommenen oder berechneten Bilddaten einer inspizierten Transporttasche analysiert und basierend auf dieser Bilddatenanalyse Daten bereitgestellt, welche Informationen dazu enthalten, ob die inspizierte Transporttasche leer ist oder ein Objekt enthält.

Vorteilhaft werden bei einem erfindungsgemässen Verfahren die aufgenommenen oder berechneten Bilddaten einer inspizierten Transporttasche analysiert und wird basierend auf dieser Bilddatenanalyse auf einem in der inspizierten Transporttasche angeordneten Objekt vorhandene optisch lesbare Informationen ausgelesen.

Die Informationen können anschliessend verwendet werden, um das Objekt zu identifizieren und/oder zu klassifizieren.

Bezüglich weiterer Details wird auf die obenstehende Diskussion einer entsprechenden vorteilhaften Ausführungsform einer Inspektionsvorrichtung verwiesen.

Vorteilhaft werden bei einem erfindungsgemässen Verfahren die aufgenommenen oder berechneten Bilddaten einer inspizierten Transporttasche mit Kl-Algorithmen analysiert und wird basierend auf dieser Bilddatenanalyse ein in der inspizierten Transporttasche angeordnetes Objekt identifiziert und/oder klassifiziert.

Bezüglich weiterer Details wird wiederum auf die obenstehende Diskussion einer entsprechenden vorteilhaften Ausführungsform einer Inspektionsvorrichtung verwiesen.

KI-Module müssen je nach Ausgestaltung der Algorithmen in der Regel zuerst trainiert werden. In einer vorteilhaften Ausführungsform eines erfindungsgemässen Inspektionsvorrichtung werden für das Training der KI-Algorithmen anstatt einer Sammlung speziell dafür angefertigter Bilder, oder zusätzlich dazu, Aufnahmen verwendet, welche eine Detektionsvorrichtung im laufenden Betrieb aufgenommen hat.

In einer vorteilhaften Variante eines erfindungsgemässen Verfahrens werden die aufgenommenen oder berechneten Bilddaten einer inspizierten Transporttasche zum Training von KI-Algorithmen verwendet, mit welchen nach erfolgtem Training weitere aufgenommene oder berechneten Bilddaten einer inspizierten Transporttasche analysiert werden können und basierend auf dieser Bilddatenanalyse ein in der inspizierten Transporttasche angeordnetes Objekt identifiziert und/oder klassifiziert werden kann.

Beispielsweise kann ein neuer Artikel in ein Intralogistiksystem eingebracht werden, und eine Detektionsvorrichtung einer Inspektionsvorrichtung nimmt entsprechende Bilder dieser Objekte in entsprechenden Transporttaschen auf. Vorteilhaft werden Bilder einer Mehrzahl dieses Objekttyps aufgenommen. Die entsprechenden Aufnahmen werden dann für das Training des KI-Moduls verwendet.

Für die Generierung der Aufnahmen kann ein Objekt mehrmals von neuem in eine Transportasche eingebracht und nach der Aufnahme der Bilddaten wieder aus dieser entnommen werden, um die Datenbasis für das KI-Modul möglichst vielfältig und realistisch zu gestalten.

Alternativ oder zusätzlich können die Aufnahmen auch im normalen Betrieb generiert und gesammelt werden. Das KI-Modul kann auf diese Weise laufend auf neue Artikel trainiert werden.

Die genannten vorteilhaften Verfahren, in welchen die die aufgenommenen oder berechneten Bilddaten einer inspizierten Transporttasche analysiert und basierend auf dieser Bilddatenanalyse auf einem in der inspizierten Transporttasche angeordneten Objekt vorhandene optisch lesbare Informationen ausgelesen werden, um das Objekt zu identifizieren und/oder klassifizieren; und/oder die aufgenommenen oder berechneten Bilddaten einer inspizierten Transporttasche mit Kl-Algorithmen analysiert und basierend auf dieser Bilddatenanalyse ein in der inspizierten Transporttasche angeordnetes Objekt identifiziert und/oder klassifiziert werden, können alternativ oder zusätzlich auch eingesetzt werden, um Objekte nach der Entnahme aus einer Transporttasche oder vor dem Einbringen in eine Transporttasche zu identifizieren und/oder klassifizieren.

Die Objekte können sich auf einem Fördermittel befinden, beispielsweise einem Bandförderer oder einem Rollenförderer. Ebenso ist es möglich, dass sich die Objekte im freien Fall oder im freien Flug befinden, beispielsweise bei einem Entnahme- oder Befüllungsvorgang. Je nach Geschwindigkeit des Objekts muss die Verschlusszeit bei der Bildaufnahme entsprechend kurz sein. Befindet sich das Objekt bei der Bildaufnahme in der Luft, können mehrere Kameramodule verwendet werden, um das Objekt möglichst vollständig abzubilden, bzw. möglichst viele Bildinformationen zu erhalten.

Bei Verwendung von zwei oder mehr Kameras ist es auch möglich, mit Hilfe entsprechender Bildverarbeitungsalgorithmen eine dreidimensionale Abbildung des Objekts zu berechnen.

Gemäss dem erfindungsgemässem Verfahren und Inspektionsvorrichtung
- wird ein Bild aufgenommen, welches mindestens eine gegen das Tascheninnere liegende Innenseite einer Wand, insbesondere einer Vorderwand einer zu inspizierenden Transporttasche zeigt;
- wird auf dem aufgenommenen Bild ein Inspektionsgebiet identifiziert, welches mindestens einen Teil der Innenseite der Wand zeigt;
- werden die Bilddaten des identifizierten Inspektionsgebiets daraufhin analysiert, ob darauf neben der Innenseite der Wand auch ein weiteres Objekt abgebildet ist; und
- werden aufgrund dieser Bilddatenanalyse Daten bereitgestellt, welche Informationen dazu enthalten, ob die inspizierte Transporttasche leer ist oder ein Objekt enthält.

Bei einer solchen Variante eines Verfahrens bzw. Inspektionsvorrichtung zur Identifizierung des Inspektionsgebiets auf dem Bild die Bildkoordinaten der beiden äusseren Endpunkte der der Taschenöffnung zugewandten oberen Kante der Vorderwand der Transporttasche und die Bildkoordinaten der beiden Endpunkte der der Taschenöffnung abgewandten unteren Kante der Vorderwand bestimmt; und wird als Inspektionsgebiet mindestens ein Teilbereich eines Vierecks festgelegt, welches durch die Bildkoordinaten der vier genannten Endpunkte definiert ist.

Alternativ oder zusätzlich ist bei einer solchen Variante eines Verfahrens die Innenseite der Vorderwand der Transporttasche monochrom; wird die Helligkeit der Bildpunkte innerhalb des Inspektionsgebiets mit einem Grenzwert verglichen; und werden aufgrund der Anzahl der Bildpunkte unterhalb und oberhalb des genannten Grenzwertes Daten bereitgestellt, welche Informationen dazu enthalten, ob innerhalb des Inspektionsgebiets ein Objekt abgebildet ist oder nicht. Besonders vorteilhaft werden bei der vorgenannten Variante des Verfahrens zusammenhängende Gruppen von Bildpunkten unterhalb und/oder oberhalb des genannten Grenzwertes, welche eine gewisse Grösse unterschreiten und/oder überschreiten, bei der Bereitstellung der Daten speziell berücksichtigt. Auf diese Weise können beispielsweise kleinere Bildfehler, die beispielsweise aufgrund von Schmutz auf einer Kameralinse oder aufgrund von Rauschen entstehen, übergangen werden. Auch kleinere Verschmutzungen beispielsweise auf der Innenseite des Tascheninnenvolumens können verworfen werden.

Bei erfindungsgemässen Verfahren werden vorteilhaft ein oder mehrere digitale Filter, beispielsweise ein Kontrastfilter, eine Tonwertkorrektur, oder eine Gradationskurve, auf Bilddaten und/oder auf aufgenommene Bilder angewendet.

Bei einer anderen vorteilhaften Variante eines erfindungsgemässen Verfahrens zur Inspektion von hängend förderbaren Transporttaschen
- wird eine zu inspizierende Transporttasche bereitgestellt, die eine Vorderwand und in hängender Position und befülltem Zustand der Transporttasche ein nach oben offenes Tascheninnenraum aufweist;
- wird die Transporttasche von einer ersten, senkrecht hängenden Lage ins eine zweite Lage gebracht, in welcher die Transporttasche auf einer schrägen Ebene derart angeordnet ist, dass die Vorderwand oder eine Kante der Vorderwand auf der schrägen Ebene aufliegt, und das der Öffnung der Transporttasche zugewandte Ende der Vorderwand in Schwerkraftrichtung tiefer liegt als das der Öffnung entgegengesetzte Ende der Vorderwand, so dass die innen liegende Oberfläche der Vorderwand eine weitere schräge Ebene bildet; und
- wird von mindestens einem Teil des Tascheninnenraums mindestens ein zweidimensionales und/oder dreidimensionales Bild aufgenommen; und/oder von einem Bereich der schrägen Ebene unterhalb der Öffnung der Transporttasche mindestens ein zweidimensionales und/oder dreidimensionales Bild aufgenommen wird; und/oder mit mindestens einem optischen Sensor, beispielsweise einem Lichtschrankenmodul, das Passieren eines auf der schrägen Ebene gleitenden Objekts detektiert wird.

Die obenstehenden Aussagen zur direkten und indirekten Inspektion einer Transporttasche im Zusammenhang mit einer erfindungsgemässen Inspektionsvorrichtung treffen natürlich auch auf das Verfahren zu.

Vorteilhaft wird bei der vorgenannten Variante eines erfindungsgemässen Verfahrens ein Bild aufgenommen, welches einen Bereich der schrägen Ebene unterhalb der Öffnung der Transporttasche zeigt; und werden die Bilddaten daraufhin analysiert, ob auf dem Bild nur die schräge Ebene abgebildet ist, oder auch ein weiteres Objekt, insbesondere eine aus der Transporttasche gerutschte oder noch rutschende Stückguteinheit; und/oder es wird mit mindestens einem optischen Sensor das Passieren von auf der schrägen Ebene gleitenden Objekten detektiert.

Besonders vorteilhaft wird dabei die Anzahl der Objekte auf der schrägen Ebene und/oder die Flächenausdehnung der Objekte bestimmt.

In allen vorgenannten Varianten erfindungsgemässer Verfahren werden vorteilhaft bei der Auswertung Informationen zu den sich in der zu inspizierenden Transporttasche befindenden Objekten berücksichtigt, insbesondere der Grösse und/oder Anzahl der Objekte.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.

In den Figuren und der dazugehörigen Beschreibung sind gleiche oder gleich wirkende Teile mit den gleichen Bezugszeichen versehen.
- Figur 1: zeigt schematisch eine Fördereinheit eines Fördersystems, mit einer Transporttasche quer zur Förderrichtung, befüllt mit einer Stückguteinheit, (1a) in einer Seitenansicht der Transporttasche mit Förderrichtung nach rechts; (1b) in einer Ansicht der Transporttasche von schräg hinten; und (1c) in einer Rückansicht der Transporttasche mit Blick in Förderrichtung.
- Figur 2: zeigt schematisch eine Vorrichtung zum Entleeren von hängend geförderten Transporttaschen.
- Figur 3: zeigt schematisch im Detail eine Momentaufnahme des Entleerungsvorgangs einer Transporttasche bei einer Vorrichtung wie in Figur 2.
- Figur 4: zeigt schematisch die automatische Inspektion einer Transporttasche nach erfolgter Entleerung.
- Figur 5: zeigt schematisch die Bildauswertung einer automatischen Inspektion einer Transporttasche.
- Figur 6: zeigt ein auszuwertendes Bild einer inspizierten Transporttasche.
- Figur 7: zeigt die Detektionsregion auf dem Bild der Figur 6.
- Figur 8: zeigt schematisch eine perspektivische Ansicht einer anderen Fördereinheit eines Fördersystems, mit einer Transporttasche quer zur Förderrichtung, befüllt mit einer Stückguteinheit, mit Förderrichtung nach rechts.
- Figur 9: zeigt schematisch eine Seitenansicht einer weiteren Fördereinheit eines Fördersystems, mit einer Transporttasche quer zur Förderrichtung, befüllt mit einer Stückguteinheit, mit Förderrichtung nach rechts, in einer geschlossenen Transportkonfiguration der Transporttasche (gestrichelte Linien) und einer geöffneten Ladekonfiguration der Transporttasche (ausgezogene Linien).
- Figur 10: zeigt schematisch die Fördereinheit, mit Blick entlang der Förderrichtung auf die Vorderwand der Transporttasche, mit möglichen Anordnungen von Kameramodulen und Beleuchtungsmodulen.

### Wege zur Ausführung der Erfindung

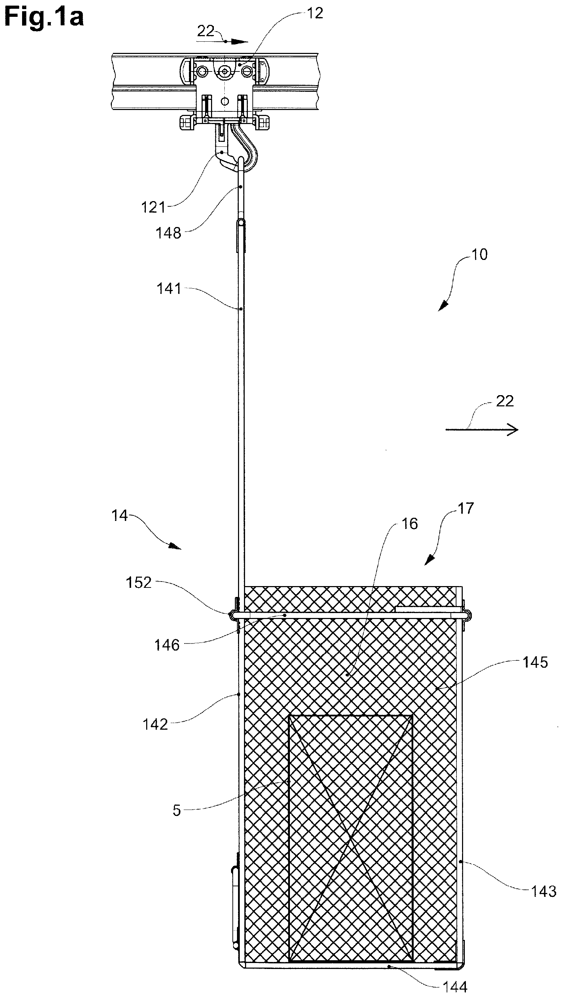

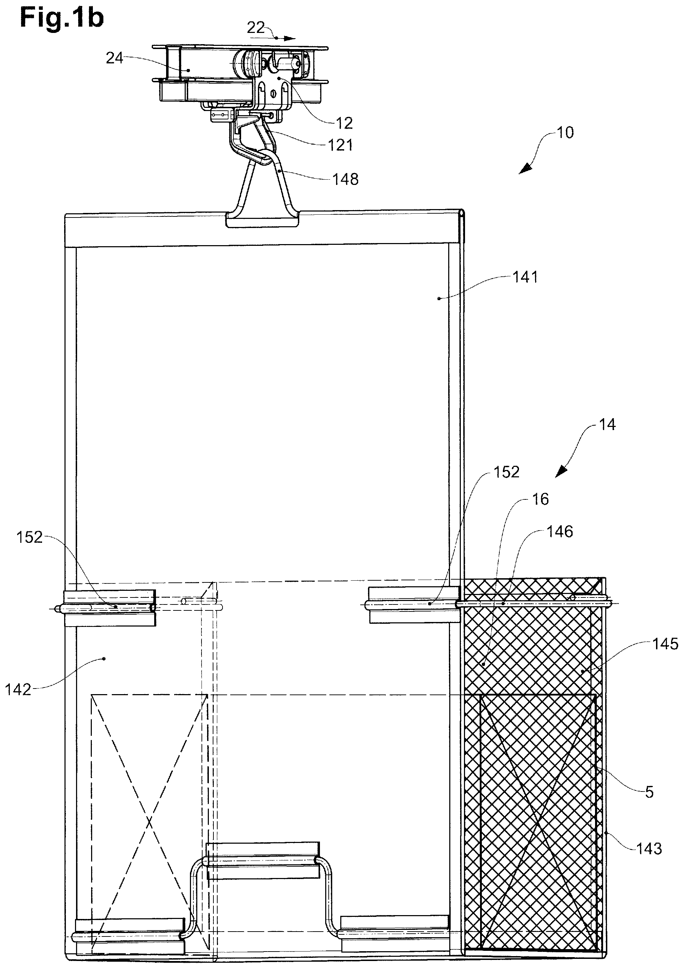

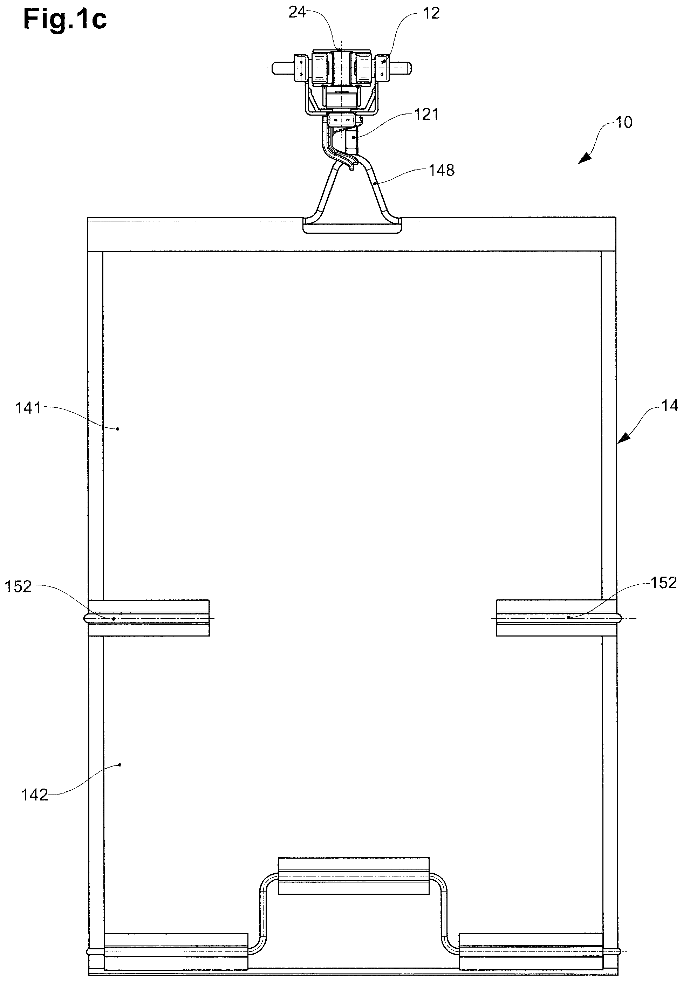

Die bereits erwähnten internationalen Anmeldungen PCT/IB2018/050445 und PCT/IB2018/050446 (veröffentlicht als WO 2018/142242 A1 und WO 2018/142243 A1) der Anmelderin beschreiben vorteilhafte Vorrichtung zum automatischen Befüllen bzw. Entleeren von hängend geförderten Transporttaschen von Fördereinheiten eines Fördersystems. Eine Fördereinheit 10 wie sie in solchen vorteilhaften Vorrichtungen verwendet werden kann, ist in Figur 1 dargestellt. Eine Transporttasche 14 hat einen Aufhängehaken 148, der in einen Traghaken 121 eines Förderwagens bzw. Laufwagens 12 eingehängt ist. Der Förderwagen bzw. Laufwagen ist in den gezeigten Ausführungsbeispielen dieser Beschreibung ein Laufwagen 12 einer schwerkraftgeförderten Hängeförderanlage 20, analog zu einer Hängeförderanlage wie sie beispielsweise in der WO 2016/030275 A1 der Anmelderin offenbart ist. Zum besseren Verständnis ist der Laufwagen 12 auf einer Laufschiene 24 eines Fördersystems 20 dargestellt, wo er sich in eine vorgesehene Förderrichtung 22 bewegt.

Die Transporttasche 14 umfasst eine Vorderwand 143, einen Bodenabschnitt 144 sowie eine Rückwand 142, die an den zusammenstossenden Kanten schwenkbeweglich verbunden sind. Vorderwand, Rückwand und Bodenabschnitt sind stabil ausgestaltet, und können beispielsweise aus einem geeigneten Plastikmaterial gefertigt sein, zum Beispiel einer Hohlprofilplatte. Flexibel ausgestaltete Seitenwände 145, 145' verbinden Vorderwand, Rückwand und Bodenabschnitt, so dass ein Tascheninnenvolumen 16 mit einer Öffnung 17 resultiert, in die mindestens eine Stückguteinheit 5 geladen werden kann. Im gezeigten Beispiel sind die Seitenwände aus einem feinmaschigen Netz gefertigt. Möglich ist auch die Verwendung eines flexiblen Textilmaterials oder einer flexiblen Folie, insbesondere einer transparenten Folie. Die Seitenwände 145, 145' sind so ausgestaltet, dass sie sich bei einem Zusammenfalten der Transporttasche wie unten beschrieben ebenfalls zusammenfalten.

Zwischen Vorderwand 143 und Rückwand 142 ist auf jeder Seite ein schwenkbeweglich befestigter Distanzhalter 146, 146' in Form eines Drahtbügels angeordnet. Die Distanzhalter sind im Wesentlichen parallel zum Bodenabschnitt 144 angeordnet und gleich lang wie der Bodenabschnitt, und die Vorderwand 143 liegt im Wesentlichen parallel zur Rückwand 142, so dass entsprechend Rückwand 142, Distanzhalter 146, 146', Vorderwand 143 und Bodenabschnitt 144 ein Parallelogramm bilden.

Im gezeigten Beispiel ist jeweils das eine Ende des Drahtbügels 146, 146' an der Rückwand 142 beweglich befestigt, nämlich drehbar beweglich, so dass ein Scharnier 152 gebildet wird. Die Befestigung des anderen Endes des Drahtbügels 146, 146' an der Vorderwand 143 erfolgt analog.

Im unbeladenen Zustand lässt das Gewicht von Vorderwand und Bodenabschnitt die Vorderwand nach unten sinken, so dass die Transporttasche in einen zweiten Zustand übergeht, in welchem Vorderwand und Rückwand nahe beieinander liegen. In dieser Konfiguration kann die Transporttasche platzsparend in einem Fördersystem aufbewahrt werden, indem die Fördereinheiten auf einer Laufschiene bündig hintereinander aufgereiht werden.

Durch Anheben der Vorderwand 143 und/oder des Bodenabschnitts 144 gegenüber der Rückwand 142 kann die Transporttasche von dem zweiten, zusammengefalteten Zustand in einen ersten, entfalteten Zustand überführt werden, wie er in Figur 1 gezeigt ist. Die nach oben gerichtete Öffnung 17 der Transporttasche 14 ist nun in einem befüllbereiten Zustand.

Im gezeigten Ausführungsbeispiel ist in der Transporttasche 14 eine Stückguteinheit 5 angeordnet, schematisch dargestellt durch ein quaderförmiges Objekt.

Die Rückwand 142 ist an ihrem oberen Ende in einen Tragabschnitt 141 verlängert, an dessen oberem Ende der Aufhängehaken 148 in Form eines Drahtbügels schwenkbar mit der Rückwand 142 beziehungsweise dessen Tragabschnitt 141 verbunden ist.

Der Traghaken 121 ist an einem von der Laufschiene 24 abgewandten unteren Ende des Laufwagens 12 angebracht. Er kann aus Metall gefertigt sein, oder aus einem geeigneten Polymermaterial, beispielsweise einem glasfaserverstärkten Thermoplastmaterial. In der Figur 1 dargestellt befindet sich der Aufhängehaken 148 in einer stabilen Position, bei welcher der Aufhängehaken 148 in einer Ebene quer zur Förderrichtung 22 ausgerichtet ist. Die Vorderseite 143 der Transporttasche 14 blickt in Förderrichtung 22.

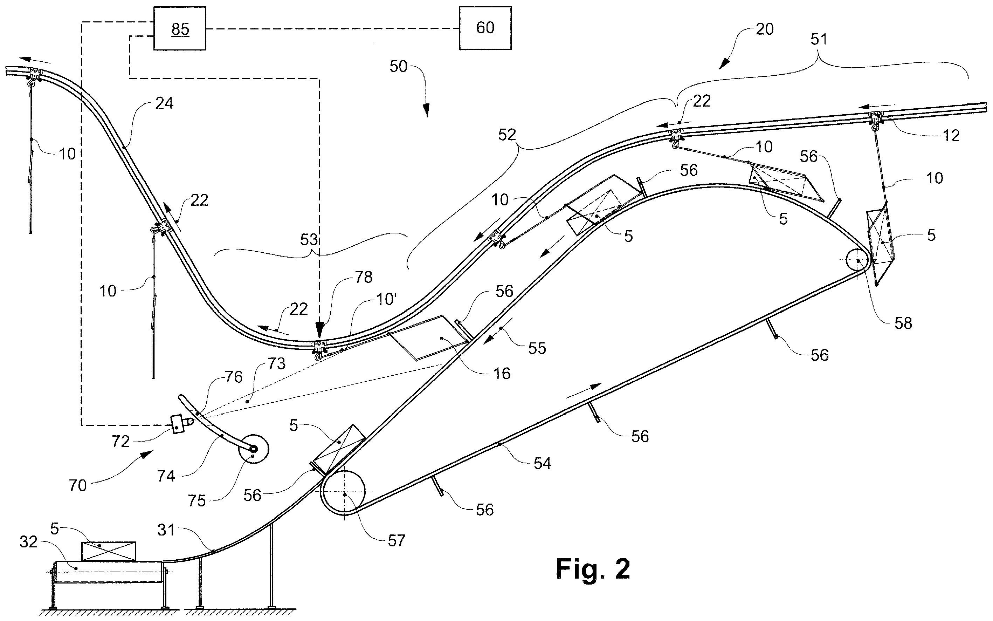

Eine vorteilhafte Vorrichtung 50 zum Entleeren von hängend geförderten Transporttaschen 14 ist in Figur 2 dargestellt, in einer Momentaufnahme eines kontinuierlichen Gesamtprozesses. Der entsprechende Prozess mit den verschiedenen Vorgängen im Betrieb der Vorrichtung wird im Detail in der internationalen Anmeldung PCT/IB2018/050446 (veröffentlicht als WO 2018/142243 A1) der Anmelderin beschrieben. Die Vorrichtung 50 erlaubt die automatisierte Entleerung von Transporttaschen 14 im kontinuierlichen Betrieb, sowie die getaktete Weitergabe der entnommenen Stückgutwaren 5 zur weiteren Verarbeitung.

Die Entleerungs-Vorrichtung 50 ist Teil eines Fördersystems 20 zur hängenden Förderung von Transporttaschen 14. Ein solches Fördersystem kann als Transportkettenförderer ausgestaltet sein, oder als schwerkraftgeförderte Hängeförderanlage. Funktionell ist dies für die Vorrichtung 50 nicht relevant, da in jedem Fall die einzelnen Fördereinheiten 10 mit den Transporttaschen 14 im Bereich der Entleerungs-Vorrichtung 50 mit einer bestimmten, konstanten Geschwindigkeit zwangsgefördert werden. Im Falle einer schwerkraftgeförderten Hängeförderanlage geschieht dies durch eine parallel zur Laufschiene 24 verlaufende Förderkettenanlage (nicht dargestellt), welche die einzelnen Laufwagen 12 mit den Transporttaschen 14 entlang des Förderwegs des Fördersystems 20 mitschleppt.

Der Förderweg des Fördersystems 20 verläuft in Förderrichtung 22 von rechts nach links. Unterhalb des Fördersystems 20 ist ein im Gegenuhrzeigersinn umlaufendes Förderband 54 angeordnet, dessen tangentiale Fördergeschwindigkeit gleich hoch ist wie die Fördergeschwindigkeit des Fördersystems. Auf dem Förderband 54 sind entlang des Umfangs in regelmässigen Abständen transversale Rippen 56 angeordnet.

In einem ersten Schritt wird eine zugeführte, befüllte Transporttasche 14 auf dem Förderband 54 abgelegt und in einen Zustand überführt, in welchem die Waren aus der Tasche entnommen werden können. Die Vorderwand der Transporttasche wird dabei durch das Eigengewicht der Vorderwand, des Bodenabschnitts und der Stückgutware nach unten gezogen, so dass der Abstand zwischen Rückwand und Vorderwand im durch das Stückgut vorgegebenen Rahmen minimal ist.

Die Vorderwand 143 der Transporttasche 14, trifft schliesslich auf das umlaufende Förderband 54, und wird in Bezug auf die Förderrichtung 22 nach hinten geschwenkt. Dies markiert den Beginn eines Kontaktabschnitts 51 der Vorrichtung 50. Das Förderband 54 weist in diesem Abschnitt eine flacher werdende Steigung auf, während die Laufschiene 24 des Fördersystems 20 ein konstantes Gefälle nach links aufweist. Es resultiert für das Förderband eine geringere horizontale Geschwindigkeitskomponente als für das Fördersystem. Schliesslich verlaufen gegen Ende des Kontaktabschnitts 51 der Förderweg des Förderbands 54 und der Förderweg des Fördersystems 20 im Wesentlichen parallel, und die horizontalen Geschwindigkeitskomponenten haben sich aneinander angepasst.

Es ist zu bemerken, dass die absoluten Geschwindigkeiten von Förderband und Fördersystem gleich hoch sind, und sich nicht ändern. Lediglich die horizontalen Geschwindigkeitskomponenten unterscheiden sich an den verschiedenen Positionen entlang des Förderwegs.

Die Abstände der transversalen Rippen 56 entspricht im Wesentlichen den Abständen der Förderwagen bzw. Laufwagen 12 der Fördereinheiten 10 auf dem Fördersystem 20. Die relative Phasenverschiebung der Rippen 56 in Bezug auf die Laufwagen 12 ist so gewählt, dass eine Rippe 56 im Kontaktabschnitt hinter einer Transporttasche 14 läuft, und dabei langsam zur Transporttasche 14 aufholt, bis schliesslich die Rippe den Bodenabschnitt 144 beziehungsweise die untere Kante der Vorderwand 143 der Transporttasche 14 erreicht. In diesem Bereich bewegt sich die Rippe horizontal schneller als die Transporttasche, deren Laufwagen bereits einen Bereich eines grösser werdenden Gefälles erreicht hat. Die Rippe 56 schiebt nun den Bodenabschnitt 144 der Tasche 14 nach vorne, so dass sich der Abstand zwischen Vorderwand 143 und Rückwand 142 vergrössert. Am Ende des Kontaktabschnitts 51 nimmt schliesslich die Transporttasche 14 einen Zustand, bei welchem die Transporttasche 14 maximal geöffnet ist und entleert werden kann. Dies markiert das Ende des Kontaktabschnitts 51 und den Beginn des Übergabeabschnitts 52 der Vorrichtung 50.

Im Übergabeabschnitt 52 verlaufen die Förderwege des Fördersystems 20 und des Förderbands 54 parallel zueinander mit einem gewissen Gefälle. Fördersystem 20 und Förderband 54 weisen eine identische horizontale und auch vertikale Geschwindigkeitskomponente auf. Eine in der Transporttasche 14 vorhandene Stückguteinheit 5 gleitet aus der Transporttasche 14 das Förderband 54 hinunter, bis schliesslich die Stückguteinheit 5 die davor laufende transversale Rippe 56 erreicht, und von dieser aufgehalten wird.

Die entleerte Transporttasche 14 wird währenddessen wieder langsam vom Förderband 54 abgehoben, da der Förderweg des Fördersystems 20 nach oben vom Förderweg des Förderbands 54 weg schwenkt. Dies markiert das Ende des Übergabeabschnitts 52 und den Beginn des Trennabschnitts 53 der Vorrichtung 50. Schlussendlich hebt die leere Transporttasche 14 vom Förderband 54 ab. Die leere Transporttasche 14 schwenkt nun zurück in die frei hängende Lage und wird nach links oben weggeführt, zur Wiederverwendung im Fördersystem 80.

Währenddessen erreicht die transversale Rippe zusammen mit der darauf liegenden Stückguteinheit 5 das Ende des Förderbands 54.

Vorteilhaft bestehen die transversalen Rippen 56 aus einer Mehrzahl von nach aussen ragenden Fingern (in Figur 2 nicht sichtbar), die durch entsprechende Schlitze (nicht sichtbar) in einer direkt an das Fliessband 54 anschliessenden Rutsche 31 laufen. Auf diese Weise werden die Stückguteinheiten 14 getaktet an die Rutsche 31 übergeben, sobald die Finger der Rippen 56 beim Erreichen der Umlenkrolle 57 durch die Schlitze der Rutsche 31 geschwenkt sind und das Stückgut nicht mehr zurückhalten. Die Stückguteinheit 5, gleitet schwerkraftgetrieben die Rutsche 31 hinunter und landet schliesslich auf einem weiteren Förderer, im gezeigten Beispiel einem Förderband 32, welches das Stückgut quer zur Rutsche zur weiteren Verwendung wegführt.

Die gezeigte Vorrichtung hat den besonderen Vorteil, dass die automatische Entleerung der Transporttaschen kontinuierlich erfolgt. Ein weiterer Vorteil ist die Möglichkeit, die entnommenen Stückguteinheiten getaktet weiterzubearbeiten.

Entlang des Förderwegs des Transportsystems 20 ist an geeigneter Stelle ein Positionssensor 78 angeordnet. Der Positionssensor kann beispielsweise ein Induktionssensorelement aufweisen, mit welchem das Passieren einer Metallenen Positionsmarke eines Mitnehmers des Förderkettenantriebs feststellt werden kann, welcher den Laufwagen 12 der Fördereinheit 10 mitschleppt. Ebenso möglich ist ein optischer Sensor wie beispielsweise eine Lichtschranke.

Erreicht eine Fördereinheit 10' nach erfolgter Entleerung der nun zu inspizierenden Transporttasche 14 den Positionssensor 78, so meldet dies der Positionssensor 78 an eine Steuerungs- und Auswertungsvorrichtung 85 der Detektionsvorrichtung. Die zu inspizierende Transporttasche hat die Detektionsposition erreicht. Die Steuerungs- und Auswertungsvorrichtung 85 der Detektionsvorrichtung 70 veranlasst nun ein geeignet angeordnetes Kameramodul 72 der Detektionsvorrichtung, durch die Taschenöffnung 17 ein Bild des Tascheninnenraums 16 aufzunehmen. Die kontinuierliche Förderung der Transporttasche wird dazu nicht unterbrochen. Das Kameramodul muss entsprechend lichtempfindlich sein, um eine geeignet kurze Verschlusszeit zu ermöglichen. Alternativ kann das Kameramodul auch kontinuierlich Bilder aufnehmen. Zwei Leuchtelemente (nicht dargestellt) beleuchten den entsprechenden Bereich.

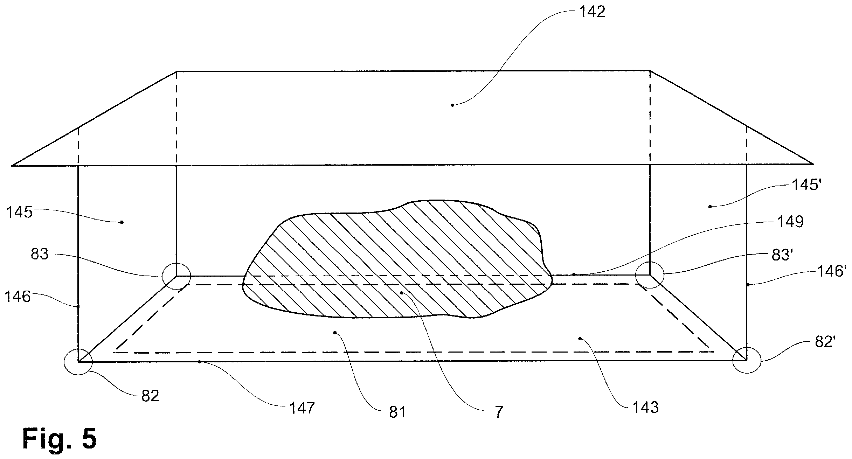

Das aufgenommene Bild wird an die Steuerungs- und Auswertungsvorrichtung 85 der Detektionsvorrichtung übermittelt. Die entsprechende Auswertung wird in den Figuren 5 bis 7 genauer besch rieben.

Kommt die Steuerungs- und Auswertungsvorrichtung 85 zum Schluss, dass die inspizierte Transporttasche leer ist, wird der kontinuierliche Fördervorgang ununterbrochen weitergeführt. Die Transporttasche wird vom Förderband 54 abgehoben. Damit die nun wieder frei hängende Transporttasche nicht an das Kameramodul 72 anstösst, führt eine Führungsrampe 74 die Transporttasche über das Kameramodul hinweg. Damit das Kameramodul dennoch freie Sicht auf die Detektionsposition hat, ist in der Rampe eine Sichtöffnung 76 vorgesehen. Um die Transporttaschen beim Kontakt mit der Führungsrampe 74 mechanisch zu schonen, ist eine Stossdämpferrolle 75 vorgesehen, welche den Aufprall der vorwärtsschwingenden Transporttasche dämpft, und anschliessend die Transporttasche auf die Führungsrampe 74 leitet. Die Stossdämpferrolle 75 kann beispielsweise als Bürstenrolle oder Schaumstoffrolle ausgestaltet sein, welche fix befestigt, frei drehend oder angetrieben ausgestaltet sein kann.

Kommt hingegen die Steuerungs- und Auswertungsvorrichtung 85 zum Schluss, dass die inspizierte Transporttasche nicht leer ist, so veranlasst die Steuerungs- und Auswertungsvorrichtung 85 eine Steuerungseinheit 60 der Entleerungsvorrichtung 50, die Förderung innerhalb der Entleerungsvorrichtung 50 zu unterbrechen. Eine Bedienperson kann nun die Transporttasche in einer Position wenig unterhalb der Detektionsposition sichten, und verbliebenen Inhalt manuell entfernen und an gegebenenfalls auf die Rutsche 31 legen. Denkbar ist beispielsweise ein leichtes Stückgut, dass durch einen Kleberrest an der Tascheninnenseite festhängt.

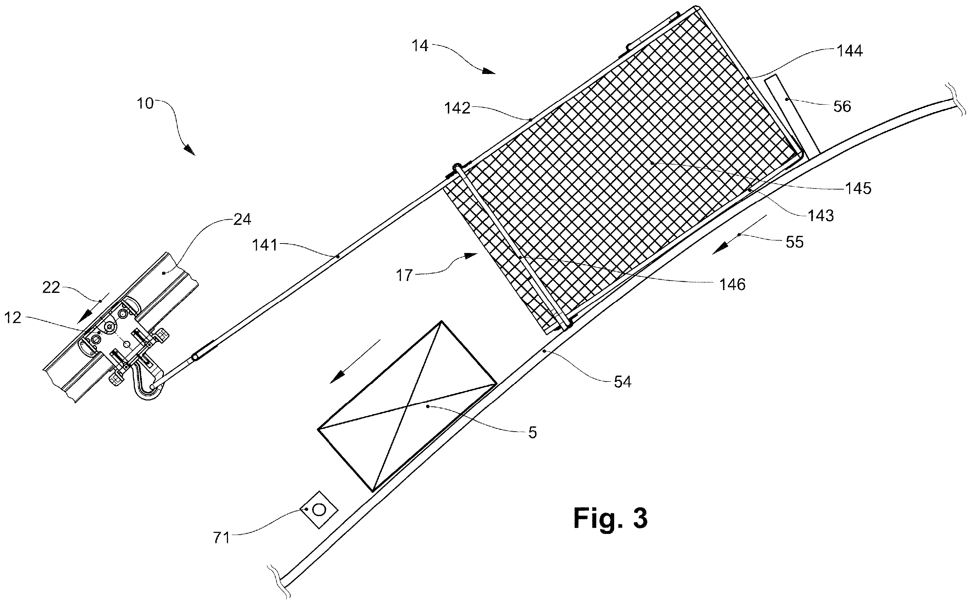

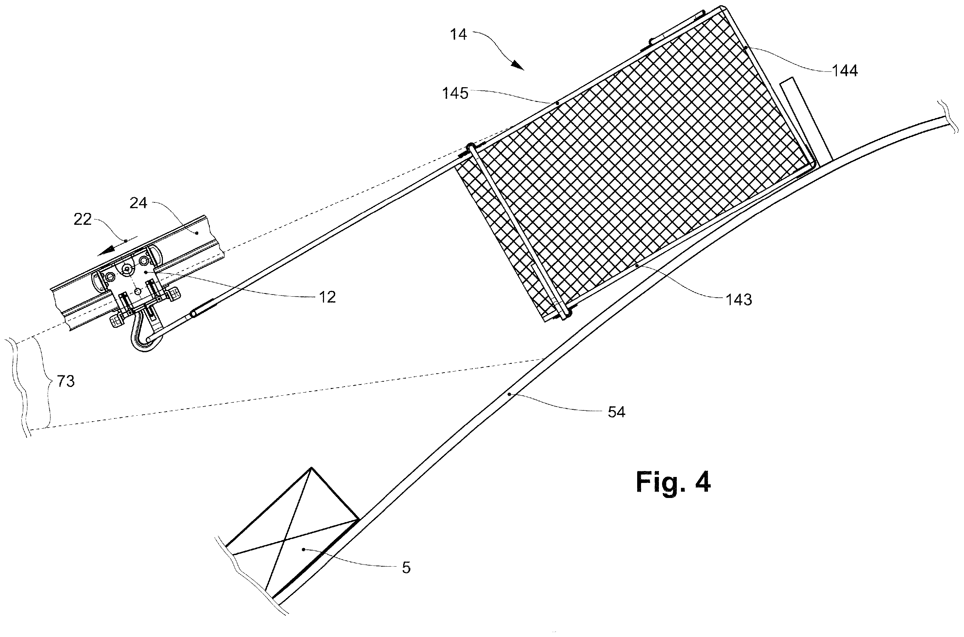

Ein erfindungsgemässer Inspektionsvorgang ist auch in den Figuren 3 und 4 dargestellt.

In Figur 3 ist die Transporttasche 14 vollständig geöffnet, da die transversale Rippe 56 des Förderband 54 die Vorderwand 143 gegenüber der vom geschleppten Laufwagen 12 gezogenen Rückwand 142 in Förderrichtung nach vorne geschoben hat. Eine zuvor in der Transporttasche befindliche Stückguteinheit 5 rutsch auf der Innenseite der Vorderwand 143 und dann auf der schrägen Ebene des Förderbands 54 nach unten, bis sie von der vorauslaufenden Rippe (nicht sichtbar) des Förderbands gestoppt wird. Eine quer zur Falllinie angeordnete Lichtschranke 71 detektiert die vorbeirutschende Stückguteinheit 5, was bereits indirekt Informationen zum Entleerungsvorgang bereitstellt. Die Laufschiene 24 und das Förderband 54 verlaufen im Wesentlichen parallel.

In Figur 4 ist eine Situation weiter stromabwärts in Förderrichtung dargestellt. Die negative Steigung der Laufschiene 24 nimmt ab, so dass die Transporttasche beginnt, vom Förderband 54 abzuheben. Nur die untere Kante der Vorderwand 143 der Transporttasche 14 liegt noch auf dem Förderband auf. Die Transporttasche ist jedoch noch vollständig geöffnet. Diese Position der Transporttasche stellt die Detektionsposition dar. Ein Kameramodul (nicht sichtbar) ist so angeordnet und eingerichtet, dass in seinem Sichtbereich 73 die Innenseite der Vorderwand 143 liegt, so dass diese vollständig abgebildet werden kann.

Das Sichtfeld 73 des Kameramoduls ist schematisch in Figur 5 gezeigt. Sichtbar ist die gesamte innere Oberfläche der Vorderwand 143 der Transporttasche. Nur teilweise sichtbar sind die Innenseiten der Seitenwände 145, 145' und des Bodenabschnitts. Die Rückwand 142 ist von aussen zu sehen.

Mit einem geeigneten Bilderkennungsalgorithmus kann nun eine Steuerungs- und Auswertungsvorrichtung der Detektionseinheit auf einem entsprechenden vom Kameramodul aufgenommenen Bild einer Transporttasche die äusseren Enden 82, 82' der oberen Kante 147 der Vorderwand identifizieren. Ebenfalls identifiziert werden die äusseren Enden 83, 83' der unteren Kante 149 der Vorderwand. Aus dem Bildbereich innerhalb des durch diese vier Punkte gebildeten Vierecks wird ein Inspektionsgebiet 81 definiert (gestricheltes Viereck). Der Bildbereich dieses Inspektionsgebietes kann nun für die Inspektion ausgewertet werden, um beispielsweise wie in der Figur 5 dargestellt die Anwesenheit eines undefinierten Objektes 7 festzustellen.

Die Festlegung des Inspektionsbereichs 81 anhand von Orientierungspunkten an der Transporttasche bietet den Vorteil, dass mögliche Unterschiede der Lage der Transporttasche an der Detektionsposition sehr einfach ausgeglichen werden können, was die Reproduzierbarkeit des Auswertungsprozesses verbessert, und die Fehlerraten senkt.

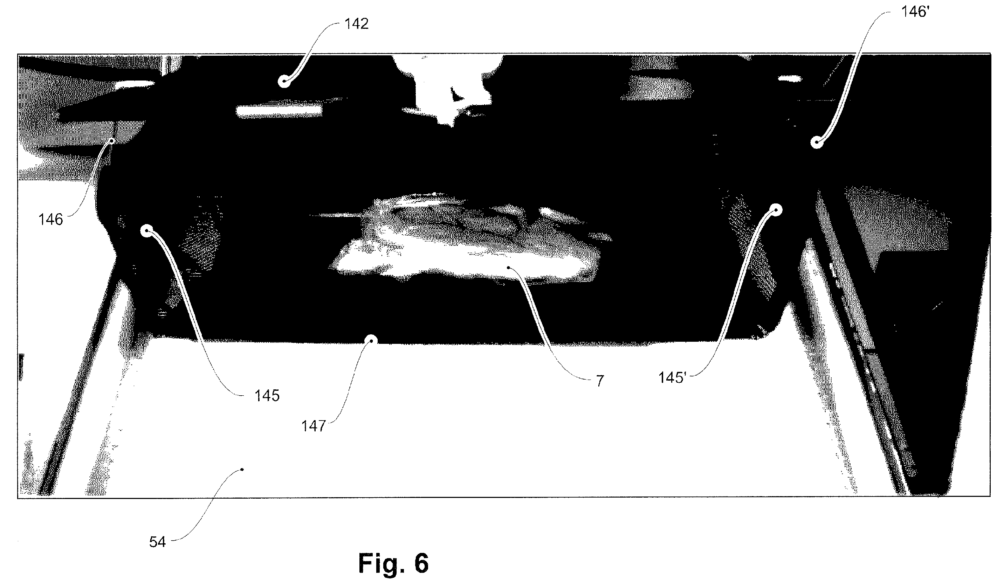

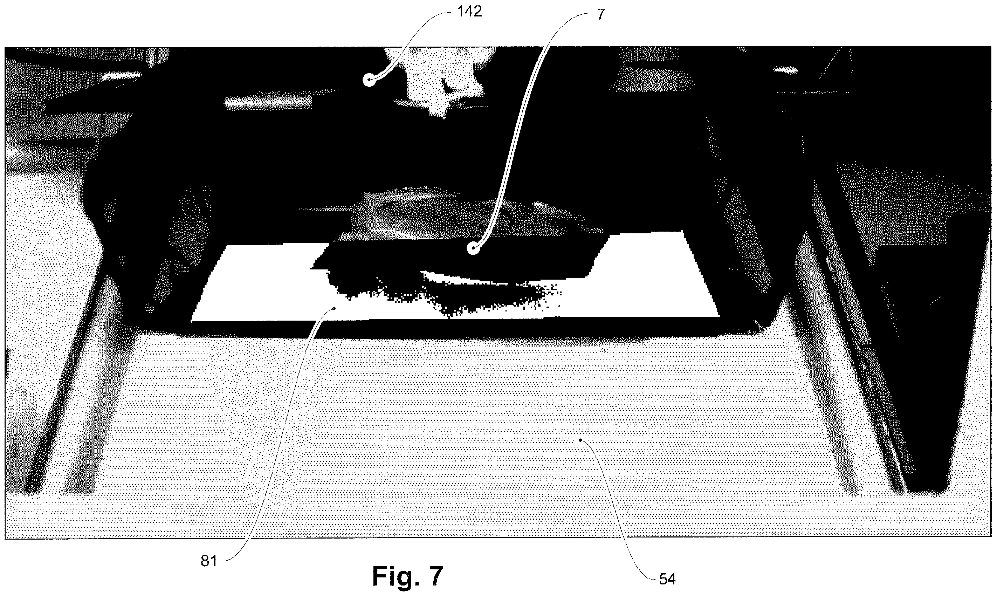

Figur 6 zeigt eine echte Aufnahme einer Schwarzweiss-Digitalkamera, mit einem Sichtbereich analog zu Figur 5. Ein Objekt 7 in Form eines in Plastik verpackten Kleidungsstücks ist im Tascheninnenraum hängengeblieben. Nach der Identifikation der vorgenannten vier Orientierungspunkte wird das Inspektionsgebiet 81 festgelegt (weisses Viereck in Figur 7). Die Bilddaten werden so bearbeitet, beispielsweise durch Anwenden einer Kontrastkurve und Festlegen eines Schwarzpunktes, dass die Innenseite der Vorderwand den Wert Null (schwarz) aufweist und hellere Fremdobjekte den Wert 1 (weiss). In Figur 7 ist der Bereich 81 zusätzlich invertiert dargestellt, so dass die Innenseite der Vorderwand weiss erscheint, und das Objekt 7 schwarz. Nun können die Bilddaten im Bereich 81 ausgewertet werden, um eine Aussage über den Entleerungsstatus der Transporttasche treffen zu können. In einer einfachen Variante können beispielsweise die schwarzen und die weissen Bildpixel gezählt werden. Unterschreitet die Anzahl Bildpixel der Vorderwand einen gewissen absoluten und/oder relativen Wert, wird das als Detektion eines Fremdobjekts 7 gewertet. Die Transporttasche ist also nicht vollständig entleert.

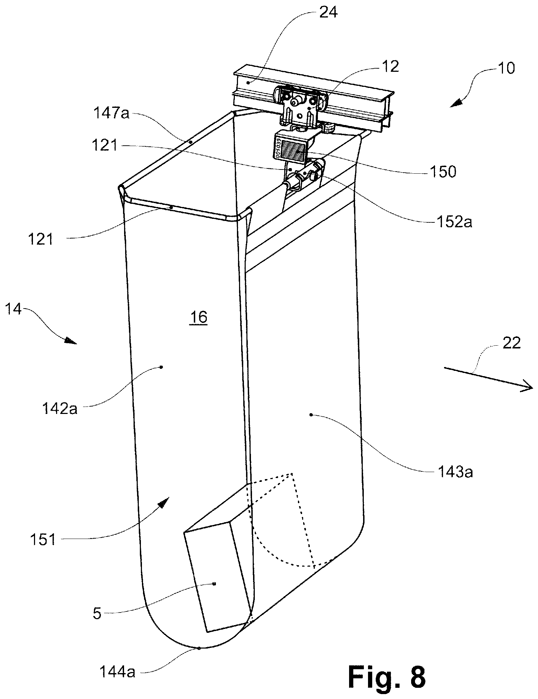

Anstatt durch eine obere Taschenöffnung, wie im vorangehend diskutierten Ausführungsbeispiel erläutert, kann ein geeignet angeordnetes Kameramodul ein Bild des Inspektionsgebiets auch durch eine seitliche Taschenöffnung aufnehmen, wenn eine solche Öffnung bei einem bestimmten Transporttaschentyp vorhanden ist (vgl. Figuren 8 -10). Ebenso kann das Bild durch eine transparente Seitenwand aufgenommen werden.

Analog ist es möglich, die Beleuchtung des Tascheninneren durch seitlich zur Transporttasche angeordnete Beleuchtungsmodule zu erreichen, welche das Inspektionsgebiet im Inneren der Transporttasche durch eine seitliche Taschenöffnung oder eine transparente oder zumindest transluzente Seitenwand der Transporttasche beleuchten.

Auch möglich ist es, die Innenseite einer Seitenwand spiegelnd oder reflektierend auszugestalten, so dass eine Bildaufnahme und/oder eine Beleuchtung indirekt über diese Seitenwand erfolgen kann.

Eine alternative Ausgestaltungsform einer Fördereinheit 10 eines Fördersystems ist in Figur 8 schematisch dargestellt. Die Fördereinheit 10 weist einen Laufwagen 12 analog zu Figur 1 und eine daran schwenkbar hängend gelagerte Transporttasche 14 auf. Der Laufwagen wird auf der Laufschiene 24 des Fördersystems seitlich formschlüssig geführt und ist entlang der Förderrichtung 22 parallel zur Laufschiene 24 rollend verschiebbar gelagert. Unterhalb des Laufwagens ist ein Traghaken 121 mit zwei Hakenelementen angeordnet. Vorteilhaft ist wie im gezeigten Ausführungsbeispiel ein Identifikationselement 150 mit dem Laufwagen 12 verbunden, welche eine Identifikation der Transporteinheit 10 erlaubt. Das Identifikationselement kann beispielsweise optisch lesbare Informationen enthalten, beispielsweise einen Barcode oder einen 2D-Matrixcode, oder eine RFID oder eine andere drahtlos auslesbare elektronische Speichervorrichtung.

Auf den Hakenelementen des Traghakens ist eine Hülse 152a der Transporttasche gelagert. Die Hülse 152a entspricht funktional sowohl dem schwenkbar mit dem Tragabschnitt verbundenen Aufhängehaken derTransporttasche aus Figur 1 als auch dem dortigen Scharnier zwischen Tragabschnitt und Bügel der Transporttasche. Zwei Enden eines Bügels der Transporttasche, der beispielsweise aus stabilem Metalldraht gefertigt sein kann, sind in der Hülse schwenkbar angeordnet, so dass ein im Wesentlichen rechteckiger, geschlossener Bügel entsteht, der um die Längsachse der Hülse 152a schwenkbar auf dem Aufhängehaken 148a gelagert ist.

Auf der Querseite des Bügels mit der Hülse 152a und auf der gegenüberliegenden Querseite 147a des Bügels ist mittels Laschen eine flexible Wand in Form einer Stoffbahn schwenkbar mit dem Bügel verbunden, so dass Bügel und flexible Wand zusammen eine Transporttasche der Fördereinheit bilden.

Vorteilhaft ist die Hülse der Transporttasche reversibel am Traghaken befestigbar, so dass die Transporttasche einfach vom Laufwagen getrennt bzw. wieder mit diesem verbindbar ist, beispielsweise für Reparaturen. Beispielsweise kann die Hülse von den Hakenelementen des Traghakens federkraftbeaufschlagt klemmend gehalten werden.

Die beiden Längsseiten des Bügels wirken als Distanzhalterelement 146a, welche zwischen der oberen Kante der Vorderwand 143a der Transporttasche und der oberen kante 147a der Rückwand 142a einen festen Abstand halten.

Um die Transporttasche 10 für einen Beladevorgang bzw. Entladevorgang zu öffnen (Ladekonfiguration), wird bei der Förderung der Transporteinheit 10 entlang der Förderrichtung 22 der vom Laufwagen nachgeschleppte Bügel der Transporttasche in einer geeigneten Kulissenführung (nicht dargestellt) des Transportsystems nach oben geschwenkt. Beispielsweise können die seitlich über die Wand der Transporttasche vorstehenden Teile 146a des Bügels für die Kulissenführung verwendet werden.

In der offenen Ladekonfiguration der Transporttasche, wie in Figur 8 gezeigt, liegt der Bügel im Wesentlichen waagrecht, so dass aufgrund der Distanzhalterelemente 146a des Bügels die im Wesentlichen senkrecht hängende Vorderwand 143a und Rückwand 142a der flexiblen Wand der Transporttasche maximal voneinander beabstandet sind. An einem unteren, dem Bügel entgegengesetzten Ende der Transporttasche sind Vorderwand und Rückwand durch einen Bodenabschnitt 144a der Taschenwand verbunden.

Quer zu Förderrichtung weist die Transporttasche in dieser Ladekonfiguration seitliche Taschenöffnungen 151 auf, durch welche die Transporteinheit beladen bzw. entladen werden kann, indem eine Stückguteinheit 5 in den Tascheninnenraum 16 der Transporttasche eingebracht wird, bzw., indem eine in der Transporttasche gelagerte Stückguteinheit 5 dem Tascheninnenraum 16 der Transporttasche entnommen wird.

Die seitliche Taschenöffnung 151 in der Ladekonfiguration erlaubt eine platzsparende Beladung der Transporttasche. Da eine im gezeigte Ausführungsbeispiel vorhandene, durch den Bügel definierte obere Taschenöffnung für die Beladung bzw. Entladung nicht benötigt wird, kann die Transporttasche in einer in Förderrichtung platzsparenden Querausrichtung verbleiben, auch wenn sie so wegen der Laufschiene für einen Ladevorgang nicht zugänglich ist.

In einer alternativen vorteilhaften Ausführungsform einer solchen Transporteinheit kann einer der beiden seitlichen Öffnungen auch mit einer Seitenwand verschlossen sein. Dies hat unter anderem der Vorteil, dass bei einem Hineinwerfen einer Stückguteinheit in die Transporttasche das entsprechende Objekt nicht auf der gegenüberliegenden Seite hinausfallen kann.

Ebenfalls kann es vorteilhaft sein, dass im Bereich des Bodenabschnitts 144a der Taschenwand einseitig oder beidseitig eine Seitenwand angeordnet ist, welche einen unteren Bereich der seitlichen Taschenöffnung verschliesst, so dass in der Tasche befindliche Güter seitlich formschlüssig gesichert sind.

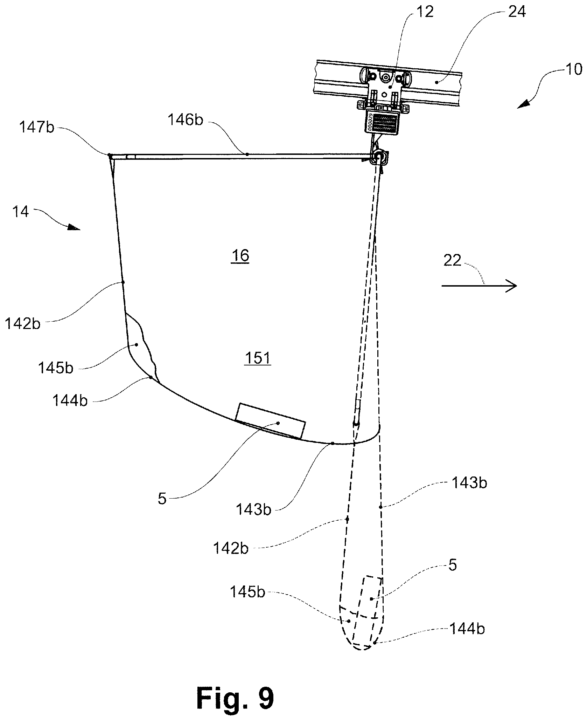

Eine andere vorteilhafte Ausführungsform einer Fördereinheit 14 eines Fördersystems mit einem Laufwagen 12 und einer und eine daran schwenkbar befestigten hängenden Transporttasche 14 ist in Figur 9 in einer schematischen Seitenansicht gezeigt, sowohl in einer geschlossenen Transportkonfiguration der Transporttasche (gestrichelte Linien) als auch in einer geöffneten Ladekonfiguration der Transporttasche (ausgezogene Linien). Die Förderrichtung 22 geht nach rechts.

Laufwagen 12 und Traghaken der Transporteinheit 10 sind gleich ausgeführt wie im Ausführungsbeispiel in Figur 8. Die Distanzhalter 146b, 146b' des Bügels sind im Vergleich zu Figur 8 länger, so dass sich in der geöffneten Ladekonfiguration der Transporttasche 14 eine grössere Seitenöffnung 151 ergibt. Die Betätigung des Bügels, also dessen Anheben und Absenken, kann wiederum über Kulissenführungen erfolgen, durch welche der Bügel bei der Förderung entlang der Förderrichtung 22 vom Laufwagen geschleppt wird

In der Ladekonfiguration liegt eine in der Transporteinheit 10 vorhandene beziehungsweise neu abgelegte Stückguteinheit 5 auf einer Innenseite eines unteren Bereichs der Vorderwand 143b der Transporttasche 14. Eine Seitenwand 145b befindet sich im Bereich des Bodenabschnitts 144b der Taschenwand, welcher die Vorderwand 143b und die Rückwand 14 verbindet.

Beim Herunterschwenken des Bügels beim Übergang von der offenen Ladekonfiguration in die geschlossenen Transportkonfiguration der Transporttasche wird der Bodenabschnitt 144b und der untere Bereich der Vorderwand 143b in Bezug auf den Laufwagen abgesenkt. Die Stückguteinheit 5 rutscht auf der Vorderwand 143b schwerkraftgetrieben in Richtung Bodenabschnitt 144b, dem Minimum der potenziellen Energie folgend, bis sie schliesslich in der Transportkonfiguration der Transporttasche 19 (gestrichelt dargestellt) auf dem Bodenabschnitt 144b liegt. In dieser Transportkonfiguration sind die Seitenwände 145b funktional, und schliessen das untere Ende der Transporttasche seitlich ab, so dass die Stückguteinheit in der Waagrechten in alle Richtungen formschlüssig in der Transporttasche gehalten ist.

Wird umgekehrt beim Übergang von der geschlossenen Transportkonfiguration der Transporttasche in die offene Ladekonfiguration der Bügel der Transporttasche heraufgeschwenkt, so werden der Bodenabschnitt 144b und der untere Bereich der Vorderwand 143b in Bezug auf den Laufwagen angehoben. Die Stückguteinheit 5 rutscht vom Bodenabschnitt 144b schwerkraftgetrieben weg, auf dem unteren Abschnitt der Vorderwand 143b dem Minimum der potenziellen Energie folgend. Die Innenseite des unteren Abschnitts 143b der Vorderwand wird somit vorübergehend zum funktionalen Boden der Transporttasche. Die Stückguteinheit 5 kann nun der Transporttasche entnommen werden. Ein Anheben der Stückguteinheit ist dabei nicht notwendig, da die Seitenwand 144b in der Ladekonfiguration der Transporttasche nicht funktional ist.

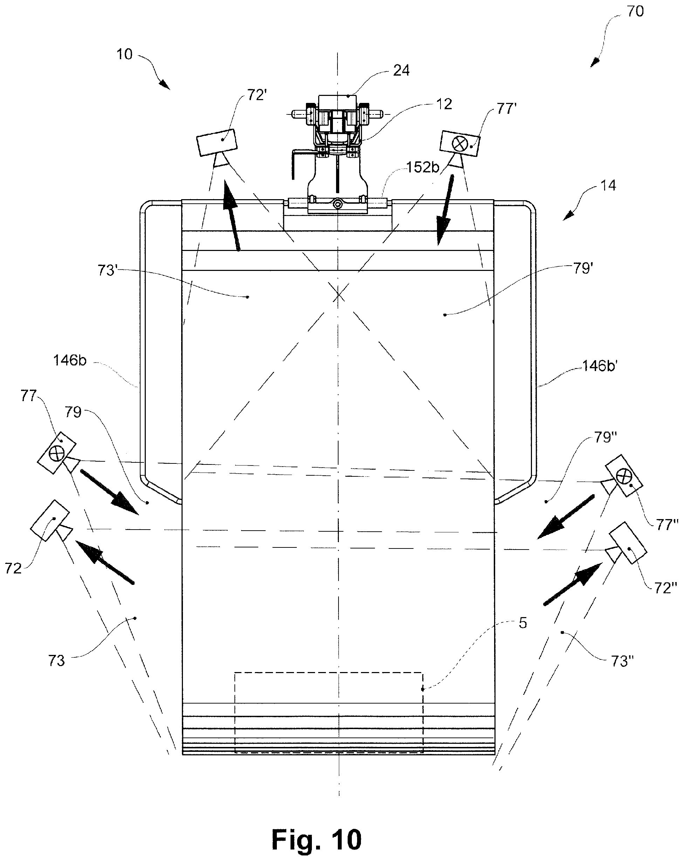

Neben den erwähnten Vorteilen bieten die in den Figuren 8 und 9 gezeigten Ausführungsformen von Transporttaschen zusätzliche Möglichkeiten in Bezug auf erfindungsgemässe Vorrichtungen zur Inspektion von hängend förderbaren Transporttaschen. Figur 10 zeigt schematisch die Fördereinheit aus Figur 9 in einer Ausführungsform einer erfindungsgemässen Inspektionsvorrichtung 70, mit Blick entlang der Förderrichtung auf die Vorderwand der Transporttasche. Es sind verschiedene mögliche Anordnungen von Kameramodulen 72 und Beleuchtungsmodulen 77 der Detektionsvorrichtung 70 dargestellt. Diese möglichen Anordnungen der verschiedenen Elemente der Detektionsvorrichtung und die nachfolgenden Ausführungen sind jedoch analog auch für die Transporttasche aus Figur 8 oder allgemein für Transporttaschen mit einer oder zwei seitlichen Taschenöffnungen anwendbar.

Die seitlichen Taschenöffnungen erlauben es, das Inspektionsgebiet auf der Innenseite der Taschenwand durch diese Öffnungen hindurch zu beobachten und/oder zu beleuchten. Beispielsweise kann ein Beleuchtungsmodul 77" seitlich der Transporttasche 14 angeordnet sein, mit einem Beleuchtungsbereich 79", welcher das Inspektionsgebiet abdeckt. Auf der gegenüberlegenden Seite der Transporttasche 14 ist ein Kameramodul 72 angeordnet, mit einem Sichtbereich 73, welcher das Inspektionsgebiet abdeckt. Die Bildauswertung kann analog zu den bereits besprochenen Inspektionsvorrichtungen erfolgen.

Ebenso ist es möglich, oberhalb der Transporttasche 14 neben der Laufschiene 24 ein Beleuchtungsmodul 77' und ein Kameramodul 72' vorzusehen, um das Inspektionsgebiet im Inneren der Transporttasche durch eine oben gelegene Taschenöffnung, nämlich durch die Öffnung des Bügels zu beleuchten beziehungsweise zu beobachten. Der Seitenbereich bleibt so frei, beispielsweise für eine Beladungsvorrichtung bzw. Entladevorrichtung.

Ebenso denkbar sind andere Kombinationen der Positionen des Kameramoduls und des Beleuchtungsmoduls.

Es können auch mehrere Kameramodule und/oder mehrere Beleuchtungsmodule verwendet werden. Die Auswertung der Daten der verschiedenen Kameramodule kann getrennt erfolgen, wobei erst die Resultate kombiniert werden. So kann beispielsweise vorgesehen sein. Dass die Kameramodule 72, 72', 72" ein Bild aufnehmen, basierend aus dem jeweils bestimmt wird, ob die Transporttasche leer ist oder nicht. Wenn basierend auf der Auswertung auch nur eines Bildes die Tasche als nicht leer klassifiziert wird, werden die anderen Ergebnisse übersteuert. Die Bilder können jedoch aus zusammen ausgewertet werden. In jedem Fall resultiert eine geringere Falschnegativ-Quote.

Anstatt einzelner Bilder können auch kontinuierliche Bilderreihen aufgenommen werden, aus welchen einzelne oder mehrere Bilder für die Auswertung verwendet werden.

Wie auch im Ausführungsbeispiel der Inspektionsvorrichtung in Figur 2 kann die Inspektion des Tascheninneren bei stillstehender Tasche erfolgen, oder während der Förderung. Die Aufnahme der Bildinformationen kann durch Sensoren ausgelöst werden, beispielsweise durch eine Lichtschranke, welche eine Transporttasche detektiert.

## Patentansprüche

1. Vorrichtung zur Inspektion von hängend förderbaren Transporttaschen (14),
mit mindestens einer hängend förderbaren Transporttasche (14) mit einem Tascheninnenraum (16) zur Aufnahme von Stückguteinheiten (5), wobei die Transporttasche mindestens eine Taschenöffnung (17, 151) des Tascheninnenraums aufweist; und mit einer Detektionsvorrichtung (70), **dadurch gekennzeichnet, dass**
die Detektionsvorrichtung eingerichtet ist, mindestens ein zweidimensionales und/oder dreidimensionales Bild von mindestens einem Teil des Tascheninnenraums einer zu inspizierenden Transporttasche aufzunehmen, welches mindestens eine gegen das Tascheninnere liegende Innenseite einer Wand, insbesondere einer Vorderwand (143, 143a, 143b) der zu inspizierenden Transporttasche (14) zeigt;
wobei die Detektionsvorrichtung ein Auswertungsmodul umfasst, welches eingerichtet ist, auf dem aufgenommenen Bild ein Inspektionsgebiet (81) zu identifizieren, welches mindestens einen Teil der Innenseite der Wand zeigt;
wobei zur Identifizierung des Inspektionsgebiets (81) auf dem Bild die Bildkoordinaten der beiden äusseren Endpunkte (82, 82') der der Taschenöffnung (17) zugewandten oberen Kante (147) der Vorderwand (143) der Transporttasche (14) und die Bildkoordinaten der beiden Endpunkte (83, 83') der der Taschenöffnung (17) abgewandten unteren Kante (147) der Vorderwand bestimmt werden; und als Inspektionsgebiet mindestens ein Teilbereich eines Vierecks festgelegt wird, welches durch die Bildkoordinaten der vier genannten Endpunkte (82, 82', 83, 83') definiert ist;
die Bilddaten des identifizierten Inspektionsgebiets daraufhin zu analysieren, ob darauf neben der Innenseite der Wand auch ein weiteres Objekt (7) abgebildet ist; und
basierend auf dieser Bilddatenanalyse Daten bereitzustellen, welche Informationen dazu enthalten, ob die inspizierte Transporttasche leer ist oder ein Objekt (7) enthält.

2. Inspektionsvorrichtung nach Anspruch 1, wobei mindestens eine Taschenöffnung (17, 151) des Tascheninnenraums der Transporttasche (14) in hängender Position der Transporttasche in einem oberen Bereich des Tascheninnenraums und/oder in einem seitlichen Bereich des Tascheninnenraums liegt.

3. Inspektionsvorrichtung nach Anspruch 1 oder 2, wobei eine Taschenöffnung der Transporttasche als transparenter Bereich in einer Wand der Transporttasche, insbesondere als Fenster oder Fensterabschnitt in einer Wand der Transporttasche, realisiert ist.

4. Inspektionsvorrichtung nach einem der vorangehenden Ansprüche, wobei die Detektionsvorrichtung (70) mindestens ein Kameramodul (72, 72', 72") umfasst, welches eingerichtet ist, das mindestens eine Bild von mindestens einem Teil des Tascheninnenraums (16) der zu inspizierenden Transporttasche (14) aufzunehmen.

5. Inspektionsvorrichtung nach einem der vorangehenden Ansprüche, wobei die Detektionsvorrichtung (70) mindestens ein Laserscannermodul umfasst, welches eingerichtet ist, einen oder mehrere Laserstrahlen über mindestens einen Teil der Oberfläche des Tascheninnenraums (16) der zu inspizierenden Transporttasche (14) zu führen.

6. Inspektionsvorrichtung nach einem der vorangehenden Ansprüche, wobei die Detektionsvorrichtung (70) ein Beleuchtungsmodul (77, 77', 77") umfasst, welches eingerichtet ist mit einem oder mehreren Beleuchtungsmitteln mindestens einen Teil des Tascheninnenraums (16) der zu inspizierenden Transporttasche (14) zu beleuchten.

7. Inspektionsvorrichtung nach einem der vorangehenden Ansprüche, wobei die Detektionsvorrichtung (70) ein Bildgebungsmodul umfasst, welches eingerichtet ist, aus aufgenommenen Bilddaten der Detektionsvorrichtung ein dreidimensionales Bild von mindestens einem Teil des Tascheninnenraums (16) einer inspizierten Transporttasche (14) zu berechnen.

8. Inspektionsvorrichtung nach einem der vorangehenden Ansprüche, wobei die Detektionsvorrichtung (70) ein Auswertungsmodul umfasst, welches eingerichtet ist, die aufgenommenen oder berechneten Bilddaten einer inspizierten Transporttasche (14) zu analysieren und basierend auf dieser Bilddatenanalyse auf einem in der inspizierten Transporttasche angeordneten Objekt vorhandene optisch lesbare Informationen auszulesen.

9. Inspektionsvorrichtung nach einem der vorangehenden Ansprüche, wobei das Auswertungsmodul der Detektionsvorrichtung (70) dazu eingerichtet ist, die aufgenommenen oder berechneten Bilddaten einer inspizierten Transporttasche (14) mit trainierten Kl-Algorithmen zu analysieren und basierend auf dieser Bilddatenanalyse ein in der inspizierten Transporttasche angeordnetes Objekt zu identifizieren und/oder zu klassifizieren, wobei die KI-Algorithmen mit einer Sammlung speziell dafür angefertigte Bilder trainiert sind, und optional zusätzlich dazu mit Aufnahmen, welche die Detektionsvorrichtung im laufenden Betrieb aufgenommen hat.

10. Inspektionsvorrichtung nach einem der vorangehenden Ansprüche, wobei die Inspektionsvorrichtung eine Vorrichtung zum Öffnen und/oder Offenhalten der Taschenöffnung einer zu inspizierenden Transporttasche aufweist.

11. Inspektionsvorrichtung nach Anspruch 10,wobei die Vorrichtung zum Öffnen und/oder Offenhalten der Taschenöffnung einer zu inspizierenden Transporttasche eine Hebevorrichtung umfasst, welche eingerichtet ist, eine zu inspizierende Transporttasche (14) von einer Förderlage (20), in welcher die Transporttasche senkrecht hängt, in eine Inspektionslage zu bringen, in welcher die Transporttasche auf einer schrägen Ebene derart angeordnet ist, dass eine Vorderwand (143) der Transporttasche oder eine Kante (147, 149) der genannten Vorderwand auf der schrägen Ebene aufliegt, und das der Taschenöffnung (17) der Transporttasche zugewandte Ende der Vorderwand in Schwerkraftrichtung tiefer liegt als das der Taschenöffnung entgegengesetzte Ende der Vorderwand, so dass die innen liegende Oberfläche der Vorderwand eine weitere schräge Ebene bildet; und
wobei die Detektionsvorrichtung (70) eingerichtet ist, das mindestens eine zweidimensionales und/oder dreidimensionales Bild von mindestens einem Teil des Tascheninnenraums (16) von einer in der Inspektionslage angeordneten Transporttasche aufzunehmen.

12. Inspektionsvorrichtung nach Anspruch 11, wobei die Hebevorrichtung einen Hebetisch, eine Rampe, ein umlaufendes Förderband (54), eine Rollenanordnung oder eine Rollenrampe umfasst, welche eine schräge Ebene bildet.

13. Inspektionsvorrichtung nach Anspruch 10,
wobei die Vorrichtung zum Öffnen und/oder Offenhalten der Taschenöffnung einer zu inspizierenden Transporttasche eine Vorrichtung (50) zum Entleeren von hängend geförderten Transporttaschen (14) umfasst,
mit einem Fördersystem (20), insbesondere einem schienengeführten Fördersystem oder einem Förderkettensystem, mit welchem Transporttaschen hängend entlang einem Förderweg zugeführt werden können; und
mit einem umlaufenden Förderband (54) zur Übernahme von in den Transporttaschen transportierten Stückguteinheiten (5),
wobei in einem Kontaktabschnitt (51) der Förderweg des Fördersystems und der Förderweg des Förderbands derart zueinander angeordnet sind, dass der Abstand des Förderwegs des Fördersystems und des Förderwegs des Förderbands kontinuierlich kleiner wird, so dass bei der Förderung einer Transporttasche entlang des Kontaktabschnitts eine Vorderwand (143) der Transporttasche das Förderband kontaktiert und auf diesem zu liegen kommt und dabei die Transporttasche nach hinten geschwenkt wird;
wobei in einem Übergabeabschnitt (52) der Förderweg des Fördersystems (20) und der Förderweg des Förderbands im Wesentlichen parallel zueinander mit einem gewissen Gefälle nach unten verlaufen, und bei der Förderung der Transporttasche entlang des Übergabeanschnitts die Vorderwand der Transporttasche weiterhin auf dem Förderband liegt, so dass die Taschenöffnung (17) der Transporttasche schräg nach unten orientiert ist, und in dem Tascheninnenraum (16) der Transporttasche vorhandene Stückguteinheiten (5) schwerkraftgetrieben aus dem Tascheninnenraum auf das Förderband gleiten;
wobei in einem Trennabschnitt (53) der Abstand des Förderwegs des Fördersystems (20) und des Förderwegs des Förderbands (54) kontinuierlich grösser wird, so dass bei der Förderung der Transporttasche (14) entlang des Trennabschnitts die entleerte Transporttasche vom Förderband abgehoben wird und in die frei hängende Lage zurück schwenkt; und
wobei die Detektionsvorrichtung (70) der Inspektionsvorrichtung derart eingerichtet ist, dass sie das mindestens eine zweidimensionale oder dreidimensionale Bild von mindestens einem Teil des Tascheninnenraums (16) der zu inspizierenden Transporttasche (14) aufnehmen kann, wenn sich die zu inspizierende Transporttasche im Übergabeabschnitt (52) oder im Trennabschnitt (53) an einer bestimmten Detektionsposition befindet, an der im funktionsgemässen Betrieb der Vorrichtung (50) zum Entleeren von hängend geförderten Transporttaschen (14) die Entleerung der zu inspizierenden Transporttasche abgeschlossen ist.

14. Inspektionsvorrichtung nach Anspruch 13, mit einer im Trennabschnitt (53) angeordneten Führungsrampe (76), welche vom Förderband (54) abgehobene Transporttaschen (14) so führt, dass eine Kollision der Transporttaschen mit Teilen der Detektionsvorrichtung (70), insbesondere einem Kameramodul (72) der Detektionsvorrichtung, nicht möglich ist.

15. Inspektionsvorrichtung nach einem der Ansprüche 10 bis 14, wobei die Vorrichtung zum Öffnen und/oder Offenhalten der Taschenöffnung einer zu inspizierenden Transporttasche eine Aktuatorvorrichtung umfasst, welche eingerichtet ist, eine mit einer stabilen Rückwand (142) einer zu inspizierenden Transporttasche (14) beweglich verbundene stabile Vorderwand (143) der Transporttasche in Bezug auf die genannte Rückwand in Richtung einer Taschenöffnung (17) der Transporttasche zu bewegen.

16. Inspektionsvorrichtung nach Anspruch 15, wobei die Aktuatorvorrichtung eingerichtet ist, eine von der Taschenöffnung (17) der Transporttasche (14) abgewandte untere Kante (149) der Vorderwand (143) der Transporttasche in Bezug auf die Rückwand (142) der Transporttasche in Richtung der Taschenöffnung zu bewegen.

17. Inspektionsvorrichtung nach Anspruch 15, wobei die Aktuatorvorrichtung einen Hebetisch, eine Rampe, ein umlaufendes Förderband (54) mit Rippen (56), eine Rollenanordnung oder eine Rollenrampe umfasst, welche die Vorderwand (143) der Transporttasche (14) beziehungsweise die untere Kante (149) derVorderwand (143) in Bezug auf die Rückwand (142) der Transporttasche in Richtung der Taschenöffnung bewegen.

18. Inspektionsvorrichtung nach einem der Ansprüche 10 bis 17, wobei die Vorrichtung zum Öffnen und/oder Offenhalten der Taschenöffnung einer zu inspizierenden Transporttasche (14) eine Aktuatorvorrichtung umfasst, welche eingerichtet ist, eine mit einer Rückwand (142a, 142b) einer zu inspizierenden Transporttasche (14) beweglich verbundene Vorderwand (143a, 143b) der Transporttasche in Bezug auf die genannte Rückwand der Transporttasche zu bewegen, oder eine mit einer Vorderwand (143a, 143b) einer zu inspizierenden Transporttasche (14) beweglich verbundene Rückwand (142a, 142b) der Transporttasche in Bezug auf die genannte Vorderwand der Transporttasche zu bewegen.

19. Inspektionsvorrichtung nach Anspruch 18, wobei die Aktuatorvorrichtung eine Kulissenführung umfasst, welche mit einem zwischen Vorderwand (143a, 143b) und Rückwand (142a, 142b) angeordneten Bügel einer zu inspizierenden Transporttasche (14) wechselwirkt.

20. Verfahren zur Inspektion von hängend förderbaren Transporttaschen,
bei welchem eine zu inspizierende Transporttasche (14) bereitgestellt wird, wobei die Transporttasche einen Tascheninnenraum (16) zur Aufnahme von Stückguteinheiten (5) und eine Taschenöffnung (17) des Tascheninnenraums aufweist; **dadurch gekennzeichnet, dass**
von mindestens einem Teil des Tascheninnenraums mindestens ein zweidimensionales und/oder dreidimensionales Bild aufgenommen wird, wobei das genannte Bild mindestens eine gegen das Tascheninnere liegende Innenseite einer Wand, insbesondere einer Vorderwand (143, 143a, 143b) der zu inspizierenden Transporttasche (14) zeigt;
auf dem aufgenommenen Bild ein Inspektionsgebiet (81) identifiziert wird, welches mindestens einen Teil der Innenseite der Wand zeigt;
wobei zur Identifizierung des Inspektionsgebiets (81) auf dem Bild die Bildkoordinaten der beiden äusseren Endpunkte (82, 82') der der Taschenöffnung (17) zugewandten oberen Kante (147) der Vorderwand (143) der Transporttasche (14) und die Bildkoordinaten der beiden Endpunkte (83, 83') der der Taschenöffnung (17) abgewandten unteren Kante (147) der Vorderwand bestimmt werden; und als Inspektionsgebiet mindestens ein Teilbereich eines Vierecks festgelegt wird, welches durch die Bildkoordinaten der vier genannten Endpunkte (82, 82', 83, 83') definiert ist;
die Bilddaten des identifizierten Inspektionsgebiets daraufhin analysiert werden, ob darauf neben der Innenseite der Wand auch ein weiteres Objekt (7) abgebildet ist; und aufgrund dieser Bilddatenanalyse Daten bereitgestellt werden, welche Informationen dazu enthalten, ob die inspizierte Transporttasche leer ist oder ein Objekt (7) enthält.

21. Verfahren nach Anspruch 20, wobei die Taschenöffnung der Transporttasche geöffnet oder offengehalten wird.

22. Verfahren nach Anspruch 20 oder 21, wobei die Transporttasche (14) mindestens eine Taschenöffnung (17, 151) des Tascheninnenraums aufweist, welche in hängender Position der Transporttasche in einem oberen Bereich des Tascheninnenraums und/oder in einem seitlichen Bereich des Tascheninnenraums liegt.

23. Verfahren nach einem der Ansprüche 20 bis 22, bei welchem die Taschenöffnung der Transporttasche als transparenter Bereich in einer Wand der Transporttasche, insbesondere als Fenster oder Fensterabschnitt in einer Wand der Transporttasche, realisiert ist

24. Verfahren nach einem der Ansprüche 20 bis 23, bei welchem aus aufgenommenen Bilddaten von mindestens einem Teil des Tascheninnenraums (16) einer inspizierten Transporttasche (14) ein dreidimensionales Bild von mindestens einem Teil des Tascheninnenraums berechnet wird.

25. Verfahren nach einem der Ansprüche 20 bis 24, bei welchem die aufgenommenen oder berechneten Bilddaten einer inspizierten Transporttasche (14) analysiert werden und basierend auf dieser Bilddatenanalyse Daten bereitgestellt werden, welche Informationen dazu enthalten, ob die inspizierte Transporttasche leer ist oder ein Objekt (7) enthält.

26. Verfahren nach einem der Ansprüche 20 bis 25, bei welchem die aufgenommenen oder berechneten Bilddaten einer inspizierten Transporttasche (14) analysiert werden und basierend auf dieser Bilddatenanalyse auf einem in der inspizierten Transporttasche angeordneten Objekt vorhandene optisch lesbare Informationen ausgelesen werden.

27. Verfahren nach einem der Ansprüche 20 bis 26, bei welchem die aufgenommenen oder berechneten Bilddaten einer inspizierten Transporttasche (14) mit trainierten Kl-Algorithmen analysiert werden und basierend auf dieser Bilddatenanalyse ein in der inspizierten Transporttasche angeordnetes Objekt identifiziert und/oder klassifiziert wird, wobei für das Training der KI-Algorithmen eine Sammlung speziell dafür angefertigte Bilder verwendet werden, und optional zusätzlich dazu Aufnahmen, welche eine Detektionsvorrichtung im laufenden Betrieb aufgenommen hat.

28. Verfahren nach einem der Ansprüche 20 bis 27, bei welchem die aufgenommenen oder berechneten Bilddaten einer inspizierten Transporttasche (14) zum Training von Kl-Algorithmen verwendet werden, mit welchen nach erfolgtem Training weitere aufgenommene oder berechneten Bilddaten einer inspizierten Transporttasche analysiert werden können und basierend auf dieser Bilddatenanalyse ein in der inspizierten Transporttasche angeordnetes Objekt identifiziert und/oder klassifiziert werden kann.

29. Verfahren nach einem der Ansprüche 20 bis 28, bei welchem die Innenseite der Vorderwand (143) der Transporttasche (14) monochrom ist; die Helligkeit der Bildpunkte innerhalb des Inspektionsgebiets mit einem Grenzwert verglichen wird; und aufgrund der Anzahl der Bildpunkte unterhalb und oberhalb des genannten Grenzwertes Daten bereitgestellt werden, welche Informationen dazu enthalten, ob innerhalb des Inspektionsgebiets ein Objekt (7) abgebildet ist oder nicht.

## Claims

1. A device for inspecting transport bags (14) that can be conveyed in a suspended manner,
with at least one transport bag (14) that can be conveyed in a suspended manner, with a bag interior (16) for receiving piece goods units (5), wherein the transport bag has at least one bag opening (17, 151) of the bag interior; and with a detection device (70), **characterized in that**
the detection device is configured to capture at least one two-dimensional and/or three-dimensional image of at least a part of the bag interior of a transport bag to be inspected, which shows at least one inner side of a wall, in particular a front wall (143, 143a, 143b) of the transport bag (14) to be inspected;
wherein the detection device has an evaluation module that is configured to identify an inspection area (81) on the captured image, which shows at least a part of the inner side of the wall;
wherein, for identifying the inspection area (81) on the image, the image coordinates of the two outer endpoints (82, 82') of the upper edge (147) of the front wall (143) of the transport bag (14) facing the bag opening (17) and the image coordinates of the two endpoints (83, 83') of the lower edge (147) of the front wall facing away from the bag opening (17) are determined; and at least a part of a quadrilateral defined by the image coordinates of the said four endpoints (82, 82', 83, 83') is set as the inspection area;
to analyze the image data of the identified inspection area, in order to determine if also another object (7) is depicted along with the inner side of the wall; and based on this image data analysis, to provide data containing information on whether the inspected transport bag is empty or contains an object (7).

2. The inspection device according to claim 1, wherein in a suspended position of the transport bag at least one bag opening (17, 151) of the bag interior of the transport bag (14) is located in an upper area and/or a lateral area of the bag interior.

3. The inspection device according to claim 1 or 2, wherein a bag opening of the transport bag is realized as a transparent area in a wall of the transport bag, in particular as a window or window section in a wall of the transport bag.

4. The inspection device according to one of the preceding claims, wherein the detection device (70) has at least one camera module (72, 72', 72") that is configured to capture the at least one image of at least a part of the bag interior (16) of the transport bag (14) to be inspected.

5. The inspection device according to one of the preceding claims, wherein the detection device (70) has at least one laser scanner module that is configured to guide one or more laser beams over at least a part of the surface of the bag interior (16) of the transport bag (14) to be inspected.

6. The inspection device according to one of the preceding claims, wherein the detection device (70) has a lighting module (77, 77', 77") that is configured to illuminate at least a part of the bag interior (16) of the transport bag (14) to be inspected with one or more lighting means.

7. Inspection device according to one of the preceding claims, wherein the detection device (70) has an imaging module that is configured to calculate a three-dimensional image of at least a part of the bag interior (16) of an inspected transport bag (14) from the captured image data of the detection device.

8. The inspection device according to one of the preceding claims, wherein the detection device (70) has an evaluation module that is configured to analyze the captured or calculated image data of an inspected transport bag (14) and, based on this image data analysis, read out optically readable information present on an object arranged in the inspected transport bag.

9. The inspection device according to one of the preceding claims, wherein the evaluation module of the detection device (70) is configured to analyze the captured or calculated image data of an inspected transport bag (14) with trained AI algorithms and based on this image data analysis to identify and/or classify an object arranged in the inspected transport bag, wherein the AI algorithms are trained with a collection of specially prepared images, and optionally additionally with pictures taken by the detection device during ongoing operation.

10. The inspection device according to one of the preceding claims, wherein the inspection device has a device for opening and/or keeping open the bag opening of a transport bag to be inspected.

11. The inspection device according to claim 10, wherein the device for opening and/or keeping open the bag opening of a transport bag to be inspected has a lifting device that is configured to bring a transport bag (14) to be inspected from a conveying position (20), in which the transport bag hangs vertically, into an inspection position, in which the transport bag is arranged on an inclined plane such that a front wall (143) of the transport bag or an edge (147, 149) of said front wall lies on the inclined plane, and the end of the front wall facing the bag opening (17) of the transport bag lies lower in the direction of gravity than the end of the front wall facing away from the bag opening, such that the inner surface of the front wall forms another inclined plane; and
wherein the detection device (70) is configured to capture at least one two-dimensional and/or three-dimensional image of at least a part of the bag interior (16) of a transport bag arranged in the inspection position.

12. The inspection device according to claim 11, wherein the lifting device has a lifting table, a ramp, a circulating conveyor belt (54), a roller arrangement, or a roller ramp forming an inclined plane.

13. The inspection device according to claim 10,
wherein the device for opening and/or keeping open the bag opening of a transport bag to be inspected has a device (50) for emptying transport bags (14) conveyed in a suspended manner,
with a conveying system (20), in particular a rail-guided conveying system or a conveyor chain system, with which transport bags can be supplied in a suspended manner along a conveying path; and
with a circulating conveyor belt (54) for receiving piece goods units (5) transported in the transport bags,
wherein in a contact section (51) the conveying path of the conveying system and the conveying path of the conveyor belt are arranged relative to each other in such a way that the distance of the conveying path of the conveying system and the conveying path of the conveyor belt continuously decreases, such that during conveying a transport bag along the contact section, a front wall (143) of the transport bag contacts the conveyor belt and comes to rest on it, and the transport bag is thereby pivoted backwards;
wherein in a transfer section (52) the conveying path of the conveying system (20) and the conveying path of the conveyor belt run substantially parallel to one another with a certain downward slope, and during conveying the transport bag along the transfer section, the front wall of the transport bag continues to lie on the conveyor belt, such that the bag opening (17) of the transport bag is oriented obliquely downwards, and piece goods units (5) present in the bag interior (16) of the transport bag slide out of the bag interior onto the conveyor belt driven by gravity;
wherein in a separation section (53) the distance of the conveying path of the conveying system (20) and the conveying path of the conveyor belt (54) continuously increases, such that that during conveying the transport bag (14) along the separation section, the emptied transport bag is lifted from the conveyor belt and swivels back into the freely suspended position; and
wherein the detection device (70) of the inspection device is configured in such a way that it can capture the at least one two-dimensional or three-dimensional image of at least a part of the bag interior (16) of the transport bag (14) to be inspected, when the transport bag to be inspected is in the transfer section (52) or in the separation section (53) at a specific detection position, where, in the functional operation of the device (50) for emptying transport bags (14) conveyed in a suspended manner, the emptying of the transport bag to be inspected is completed.

14. The inspection device according to claim 13, with a guide ramp (76) arranged in the separation section (53), which guides transport bags (14) lifted from the conveyor belt (54) in such a way that a collision of the transport bags with parts of the detection device (70), in particular a camera module (72) of the detection device, is not possible.

15. The inspection device according to one of claims 10 to 14, wherein the device for opening and/or keeping open the bag opening of a transport bag to be inspected has an actuator device that is configured to move a stable front wall (143) of the transport bag (14) to be inspected, which is movably connected to a stable rear wall (142) of the transport bag to be inspected, in relation to said rear wall towards a bag opening (17) of the transport bag.

16. The inspection device according to claim 15, wherein the actuator device is configured to move a lower edge (149) of the front wall (143) of the transport bag (14), facing away from the bag opening (17), in relation to the rear wall (142) of the transport bag towards the bag opening.

17. The inspection device according to claim 15, wherein the actuator device has a lifting table, a ramp, a circulating conveyor belt (54) with ribs (56), a roller arrangement, or a roller ramp, which moves the front wall (143) of the transport bag (14) or the lower edge (149) of the front wall (143) in relation to the rear wall (142) of the transport bag towards the bag opening.

18. The inspection device according to one of claims 10 to 17, wherein the device for opening and/or keeping open the bag opening of a transport bag (14) to be inspected has an actuator device that is configured to move a front wall (143a, 143b) of the transport bag (14) to be inspected, which is movably connected to a rear wall (142a, 142b) of the transport bag to be inspected, in relation to said rear wall of the transport bag, or to move a rear wall (142a, 142b) of the transport bag (14) to be inspected, which is movably connected to a front wall (143a, 143b) of the transport bag, in relation to said front wall of the transport bag.

19. The inspection device according to claim 18, wherein the actuator device has a guide rail means, which interacts with a bracket arranged between the front wall (143a, 143b) and rear wall (142a, 142b) of a transport bag (14) to be inspected.

20. A method for inspecting transport bags that can be conveyed in a suspended manner,
in which a transport bag (14) to be inspected is provided, wherein the transport bag has a bag interior (16) for receiving piece goods units (5), and a bag opening (17) of the bag interior; **characterized in that**
at least one two-dimensional and/or three-dimensional image is captured of at least a part of the bag interior, wherein said image shows at least one inner side of a wall facing the bag interior, in particular a front wall (143, 143a, 143b), of the transport bag (14) to be inspected;
an inspection area (81) is identified on the captured image, which shows at least a part of the inner side of the wall;
wherein, for identifying the inspection area (81) on the image, the image coordinates of the two outer endpoints (82, 82') of the upper edge (147) of the front wall (143) of the transport bag (14) facing the bag opening (17) and the image coordinates of the two endpoints (83, 83') of the lower edge (147) of the front wall facing away from the bag opening (17) are determined; and at least a part of a quadrilateral defined by the image coordinates of the said four endpoints (82, 82', 83, 83') is set as the inspection area;
the image data of the identified inspection area is analyzed in order to determine if another object (7) is depicted along with the inner side of the wall; and
based on this image data analysis, data is provided containing information on whether the inspected transport bag is empty or contains an object (7).

21. The method according to claim 20, wherein the bag opening of the transport bag is opened or kept open.

22. The method according to claim 20 or 21, wherein the transport bag (14) has at least one bag opening (17, 151) of the bag interior, which in a suspended position of the transport bag is located in an upper area and/or a lateral area of the bag interior.

23. The method according to one of claims 20 to 22, wherein the bag opening of the transport bag is realized as a transparent area in a wall of the transport bag, in particular as a window or window section in a wall of the transport bag.

24. The method according to one of claims 20 to 23, wherein a three-dimensional image of at least a part of the bag interior (16) of an inspected transport bag (14) is calculated from captured image data of at least a part of the bag interior.

25. The method according to one of claims 20 to 24, wherein the captured or calculated image data of an inspected transport bag (14) is analyzed, and based on this image data analysis data is provided containing information on whether the inspected transport bag is empty or contains an object (7).

26. The method according to one of claims 20 to 25, wherein the captured or calculated image data of an inspected transport bag (14) is analyzed, and based on this image data analysis optically readable information present on an object arranged in the inspected transport bag is read out.

27. The method according to one of claims 20 to 26, wherein the captured or calculated image data of an inspected transport bag (14) is analyzed with trained AI algorithms, and based on this image data analysis an object arranged in the inspected transport bag is identified and/or classified, wherein a collection of specially prepared images is used for training the AI algorithms, and optionally additionally pictures taken by a detection device during ongoing operation.

28. The method according to one of claims 20 to 27, wherein the captured or calculated image data of an inspected transport bag (14) is used for training AI algorithms, with which after occurred training further captured or calculated image data of an inspected transport bag can be analyzed and based on this image data analysis, an object arranged in the inspected transport bag can be identified and/or classified.

29. The method according to one of claims 20 to 28, wherein the inner side of the front wall (143) of the transport bag (14) is monochrome; the brightness of the image points within the inspection area is compared with a threshold value; and based on the number of image points below and above said threshold value, data is provided containing information on whether an object (7) is depicted within the inspection area or not.

## Revendications

1. Dispositif d'inspection de sacs de transport transportable suspendus (14),
avec au moins un sac de transport (14) transportable suspendu avec un intérieur de sac (16) pour recevoir des unités de marchandises (5), le sac de transport présentant au moins une ouverture de sac (17, 151) de l'intérieur du sac ; et avec un dispositif de détection (70), **caractérisé en ce que**
le dispositif de détection est conçu pour prendre au moins une image bidimensionnelle et/ou tridimensionnelle d'au moins une partie de l'intérieur du sac d'un sac de transport à inspecter, qui montre au moins une face intérieure d'une paroi du sac de transport à inspecter (14), en particulier d'une paroi avant (143, 143a, 143b), située contre l'intérieur du sac ;
le dispositif de détection comprenant un module d'évaluation agencé pour identifier sur l'image capturée une zone d'inspection (81) montrant au moins une partie de l'intérieur de la paroi ;
dans lequel, pour identifier la zone d'inspection (81) sur l'image, les coordonnées d'image des deux points d'extrémité extérieurs (82, 82') du bord supérieur (147) de la paroi avant (143) du sac de transport (14) tourné vers l'ouverture de sac (17) et les coordonnées d'image des deux points d'extrémité (83, 83') du bord inférieur (147) de la paroi avant opposé à l'ouverture de sac (17) sont déterminées ; et au moins une zone partielle d'un quadrilatère définie par les coordonnées d'image desdits quatre points d'extrémité (82, 82', 83, 83') est définie comme zone d'inspection ;
analyser les données d'image de la zone d'inspection identifiée afin de déterminer si un autre objet (7) est représenté en plus de l'intérieur de la paroi ; et
sur la base de cette analyse des données d'image, fournir des données contenant des informations indiquant si le sac de transport inspecté est vide ou s'il contient un objet (7).

2. Dispositif d'inspection selon la revendication 1, dans lequel au moins une ouverture de sac (17, 151) de l'intérieur du sac de transport (14) en position suspendue du sac de transport se trouve dans une zone supérieure de l'intérieur du sac et/ou dans une zone latérale de l'intérieur du sac.

3. Dispositif d'inspection selon la revendication 1 ou 2, dans lequel une ouverture de sac du sac de transport est réalisée en tant que zone transparente dans une paroi du sac de transport, en particulier en tant que fenêtre ou section de fenêtre dans une paroi du sac de transport.

4. Dispositif d'inspection selon l'une quelconque des revendications précédentes, dans lequel le dispositif de détection (70) comprend au moins un module de caméra (72, 72', 72") qui est agencé pour prendre la au moins une image d'au moins une partie de l'intérieur de sac (16) du sac de transport (14) à inspecter.

5. Dispositif d'inspection selon l'une quelconque des revendications précédentes, dans lequel le dispositif de détection (70) comprend au moins un module de scanner laser qui est agencé pour guider un ou plusieurs faisceaux laser sur au moins une partie de la surface de l'intérieur de sac (16) du sac de transport (14) à inspecter.

6. Dispositif d'inspection selon l'une quelconque des revendications précédentes, dans lequel le dispositif de détection (70) comprend un module d'éclairage (77, 77', 77") qui est agencé pour éclairer au moins une partie de l'intérieur de sac (16) du sac de transport (14) à inspecter avec un ou plusieurs moyens d'éclairage.

7. Dispositif d'inspection selon l'une quelconque des revendications précédentes, dans lequel le dispositif de détection (70) comprend un module d'imagerie qui est agencé pour calculer une image tridimensionnelle d'au moins une partie de l'intérieur de sac (16) d'un sac de transport (14) inspecté à partir des données d'image capturées du dispositif de détection.

8. Dispositif d'inspection selon l'une quelconque des revendications précédentes, dans lequel le dispositif de détection (70) comprend un module d'évaluation qui est agencé pour analyser les données d'image enregistrées ou calculées d'un sac de transport inspecté (14) et pour lire les informations lisibles optiquement présentes sur un objet disposé dans le sac de transport inspecté sur la base de cette analyse de données d'image.

9. Dispositif d'inspection selon l'une quelconque des revendications précédentes, dans lequel le module d'évaluation du dispositif de détection (70) est agencé pour analyser les données d'image capturées ou calculées d'un sac de transport inspecté (14) avec des algorithmes d'intelligence artificielle entraînés et, sur la base de cette analyse de données d'image, pour identifier et/ou classer un objet placé dans le sac de transport inspecté, les algorithmes d'intelligence artificielle étant entraînés avec une collection d'images spécialement conçues à cet effet, et éventuellement en plus avec des images prises par le dispositif de détection pendant le fonctionnement.

10. Dispositif d'inspection selon l'une quelconque des revendications précédentes, dans lequel le dispositif d'inspection comprend un dispositif pour ouvrir et/ou maintenir ouverte l'ouverture d'un sac de transport à inspecter.

11. Dispositif d'inspection selon la revendication 10, dans lequel le dispositif pour ouvrir et/ou maintenir ouverte l'ouverture de sac d'un sac de transport à inspecter comprend un dispositif de levage qui est agencé pour amener un sac de transport à inspecter (14) d'une position de transport (20) dans laquelle le sac de transport est suspendu verticalement à une position d'inspection dans laquelle le sac de transport est disposé sur un plan incliné de telle sorte qu'une paroi avant (143) du sac de transport ou un bord (147, 149) de ladite paroi avant repose sur le plan incliné, et l'extrémité de la paroi avant tournée vers l'ouverture de sac (17) du sac de transport est plus basse dans le sens de la gravité que l'extrémité de la paroi avant opposée à l'ouverture de sac, de sorte que la surface intérieure de la paroi avant forme un autre plan incliné ; et
dans lequel le dispositif de détection (70) est configuré pour prendre au moins une image bidimensionnelle et/ou tridimensionnelle d'au moins une partie de l'intérieur de sac (16) d'un sac de transport disposé dans la position d'inspection.

12. Dispositif d'inspection selon la revendication 11, dans lequel le dispositif de levage comprend une table élévatrice, une rampe, une bande transporteuse rotative (54), un ensemble de rouleaux ou une rampe à rouleaux formant un plan incliné.

13. Dispositif d'inspection selon la revendication 10,
dans lequel le dispositif pour ouvrir et/ou maintenir ouverte l'ouverture de sac d'un sac de transport à inspecter comprend un dispositif (50) pour vider des sacs de transport (14) transportés suspendus,
avec un système de transport (20), en particulier un système de transport guidé par rails ou un système de chaîne de transport, avec lequel des sacs de transport suspendus peuvent être acheminés le long d'un trajet de transport ; et avec une bande transporteuse circulant (54) pour la prise en charge des unités de marchandises (5) transportées dans les sacs de transport,
dans une section de contact (51), le chemin de transport du système de transport et le chemin de transport de la bande transporteuse sont disposés l'un par rapport à l'autre de telle sorte que la distance entre le chemin de transport du système de transport et le chemin de transport de la bande transporteuse diminue continuellement, de sorte que lors du transport d'un sac de transport le long de la section de contact, une paroi avant (143) du sac de transport entre en contact avec la bande transporteuse et repose sur celle-ci tout en faisant pivoter le sac de transport vers l'arrière ;
dans une section de transfert (52), le chemin de transport du système de transport (20) et le chemin de transport de la bande transporteuse sont essentiellement parallèles l'un à l'autre avec une certaine pente vers le bas, et lors du transport du sac de transport le long de la section de transfert, la paroi avant du sac de transport reste sur la bande transporteuse, de sorte que l'ouverture de sac (17) du sac de transport est orientée obliquement vers le bas, et dans l'intérieur de sac (16) du sac de transport, les unités de marchandises (5) présentes glissent par gravité de l'intérieur du sac sur la bande transporteuse ;
dans lequel, dans une section de séparation (53), la distance entre le chemin de transport du système de transport (20) et le chemin de transport de la bande transporteuse (54) augmente continuellement, de sorte que lors du transport du sac de transport (14) le long de la section de séparation, le sac de transport vidé est soulevé de la bande transporteuse et pivote vers la position suspendue librement ; et dans lequel le dispositif de détection (70) du dispositif d'inspection est configuré de telle sorte qu'il peut prendre au moins une image bidimensionnelle ou tridimensionnelle d'au moins une partie de l'intérieur de sac (16) du sac de transport (14) à inspecter lorsque le sac de transport à inspecter se trouve dans la section de transfert (52) ou dans la section de séparation (53) dans une certaine position de détection où, lors du fonctionnement correct du dispositif (50) pour vider les sacs de transport (14) transportés suspendus, la vidange du sac de transport à inspecter est terminée.

14. Dispositif d'inspection selon la revendication 13, avec une rampe de guidage (76) disposée dans la section de séparation (53), qui guide des sacs de transport (14) soulevés de la bande transporteuse (54) de telle sorte qu'une collision des sacs de transport avec des parties du dispositif de détection (70), en particulier un module de caméra (72) du dispositif de détection, n'est pas possible.

15. Dispositif d'inspection selon l'une quelconque des revendications 10 à 14, dans lequel le dispositif pour ouvrir et/ou maintenir ouverte l'ouverture de sac d'un sac de transport à inspecter comprend un dispositif d'actionnement qui est agencé pour déplacer une paroi avant (143) stable du sac de transport, reliée de manière mobile à une paroi arrière (142) stable d'un sac de transport (14) à inspecter, par rapport à ladite paroi arrière, en direction d'une ouverture de sac (17) du sac de transport.

16. Dispositif d'inspection selon la revendication 15, dans lequel le dispositif d'actionnement est agencé pour déplacer un bord inférieur (149) de la paroi avant (143) du sac de transport, opposé à l'ouverture de sac (17) du sac de transport (14), par rapport à la paroi arrière (142) du sac de transport, en direction de l'ouverture de sac.

17. Dispositif d'inspection selon la revendication 15, dans lequel le dispositif d'actionnement comprend une table élévatrice, une rampe, une bande transporteuse circulant (54) avec des nervures (56), un agencement de galets ou une rampe de galets qui déplacent la paroi avant (143) du sac de transport (14) ou le bord inférieur (149) de la paroi avant (143) par rapport à la paroi arrière (142) du sac de transport en direction de l'ouverture du sac.

18. Dispositif d'inspection selon l'une quelconque des revendications 10 à 17, dans lequel le dispositif pour ouvrir et/ou maintenir ouverte l'ouverture de sac d'un sac de transport (14) à inspecter comprend un dispositif d'actionnement qui est agencé pour déplacer une paroi avant (143a, 143b) du sac de transport, reliée de manière mobile à une paroi arrière (142a, 142b) d'un sac de transport (14) à inspecter, par rapport à ladite paroi arrière du sac de transport, ou pour déplacer une paroi arrière (142a, 142b) du sac de transport, reliée de manière mobile à une paroi avant (143a, 143b) d'un sac de transport (14) à inspecter, par rapport à ladite paroi avant du sac de transport.

19. Dispositif d'inspection selon la revendication 18, dans lequel le dispositif d'actionnement comprend un guidage coulissant qui interagit avec un étrier d'un sac de transport (14) à inspecter disposé entre la paroi avant (143a, 143b) et la paroi arrière (142a, 142b).

20. Procédé d'inspection de sacs de transport suspendus transportables,
dans lequel un sac de transport (14) à inspecter est prévu, le sac de transport présentant un intérieur de sac (16) pour recevoir des unités de marchandises (5) et une ouverture de sac (17) de l'intérieur du sac ; **caractérisé en ce que**
au moins une image bidimensionnelle et/ou tridimensionnelle est prise d'au moins une partie de l'intérieur du sac, ladite image montrant au moins une face intérieure d'une paroi, en particulier d'une paroi avant (143, 143a, 143b) du sac de transport (14) à inspecter, située contre l'intérieur du sac ;
une zone d'inspection (81) est identifiée sur l'image capturée, montrant au moins une partie de l'intérieur de la paroi ;
dans lequel, pour identifier la zone d'inspection (81) sur l'image, les coordonnées d'image des deux points d'extrémité extérieurs (82, 82') du bord supérieur (147) de la paroi avant (143) du sac de transport (14) tourné vers l'ouverture de sac (17) et les coordonnées d'image des deux points d'extrémité (83, 83') du bord inférieur (147) de la paroi avant opposé à l'ouverture de sac (17) sont déterminées ; et au moins une zone partielle d'un quadrilatère est définie comme zone d'inspection, qui est définie par les coordonnées d'image desdits quatre points d'extrémité (82, 82', 83, 83');
les données d'image de la zone d'inspection identifiée sont ensuite analysées pour déterminer si un autre objet (7) est représenté en plus de l'intérieur de la paroi ; et
sur la base de cette analyse des données d'image, des données sont fournies qui contiennent des informations indiquant si le sac de transport inspecté est vide ou s'il contient un objet (7).

21. Procédé selon la revendication 20, dans lequel l'ouverture de sac du sac de transport est ouverte ou maintenue ouverte.

22. Procédé selon la revendication 20 ou 21, dans lequel le sac de transport (14) présente au moins une ouverture de sac (17, 151) de l'intérieur du sac qui, en position suspendue du sac de transport, se trouve dans une zone supérieure de l'intérieur du sac et/ou dans une zone latérale de l'intérieur du sac.

23. Procédé selon l'une quelconque des revendications 20 à 22, dans lequel l'ouverture de sac du sac de transport est réalisée sous la forme d'une zone transparente dans une paroi du sac de transport, en particulier sous la forme d'une fenêtre ou d'une section de fenêtre dans une paroi du sac de transport.

24. Procédé selon l'une quelconque des revendications 20 à 23, dans lequel une image tridimensionnelle d'au moins une partie de l'intérieur du sac est calculée à partir de données d'image enregistrées d'au moins une partie de l'intérieur de sac (16) d'un sac de transport (14) inspecté.

25. Procédé selon l'une quelconque des revendications 20 à 24, dans lequel les données d'image enregistrées ou calculées d'un sac de transport inspecté (14) sont analysées et, sur la base de cette analyse de données d'image, des données sont fournies, qui contiennent des informations indiquant si le sac de transport inspecté est vide ou contient un objet (7).

26. Procédé selon l'une quelconque des revendications 20 à 25, dans lequel les données d'image enregistrées ou calculées d'un sac de transport inspecté (14) sont analysées et, sur la base de cette analyse de données d'image, les informations lisibles optiquement disponibles sur un objet disposé dans le sac de transport inspecté sont lues.

27. Procédé selon l'une quelconque des revendications 20 à 26, dans lequel les données d'image enregistrées ou calculées d'un sac de transport inspecté (14) sont analysées avec des algorithmes d'intelligence artificielle entraînés et, sur la base de cette analyse de données d'image, un objet placé dans le sac de transport inspecté est identifié et/ou classé, une collection d'images spécialement conçues à cet effet étant utilisée pour la formation des algorithmes d'intelligence artificielle et, en option, des images supplémentaires enregistrées par un dispositif de détection pendant le fonctionnement.

28. Procédé selon l'une quelconque des revendications 20 à 27, dans lequel les données d'image enregistrées ou calculées d'un sac de transport inspecté (14) sont utilisées pour la formation d'algorithmes d'intelligence artificielle, avec lesquels, après la formation, d'autres données d'image enregistrées ou calculées d'un sac de transport inspecté peuvent être analysées et, sur la base de cette analyse de données d'image, un objet placé dans le sac de transport inspecté peut être identifié et/ou classé.

29. Procédé selon l'une quelconque des revendications 20 à 28, dans lequel l'intérieur de la paroi avant (143) du sac de transport (14) est monochrome ; la luminosité des points d'image à l'intérieur de la zone d'inspection est comparée à une valeur limite ; et des données sont fournies en fonction du nombre de points d'image en dessous et au-dessus de ladite valeur limite, qui contiennent des informations indiquant si un objet (7) est représenté ou non à l'intérieur de la zone d'inspection.
